# EUROPEAN PATENT SPECIFICATION

(11) **EP 3 895 972 B1**
(45) Date of publication and mention of the grant of the patent: **23.11.2022**
(21) Application number: 20752572.6
(22) Date of filing: 06.02.2020
(51) Int. Cl.: B62M 25/08, F16H 59/18, F16H 59/50, F16H 59/66, F16H 63/50, F16H 61/16, F16H 61/682, B62J 45/415, B62M 11/06, F16H 61/02

(54) **LEANING VEHICLE**
NEIGEFAHRZEUG
VÉHICULE À INCLINAISON

(30) Priority: 06.02.2019 JP 2019019429
(43) Date of publication of application: 20.10.2021
(73) Proprietor: Yamaha Hatsudoki Kabushiki Kaisha, Iwata-shi, Shizuoka 438-8501 (JP)
(72) Inventor: OHATA, Shinobu, Iwata-shi, Shizuoka 438-8501 (JP)
(74) Representative: Stöckeler, Ferdinand
(86) International application number: PCT/JP2020/004676
(87) International publication number: WO 2020/162572

(56) References cited:
- WO-A1-2012/067234
- JP-A- 2010 121 672
- JP-A- 2012 197 809
- JP-A- 2013 209 053
- US-A1- 2008 077 301

## Description

### TECHNICAL FIELD

The present teaching relates to a leaning vehicle that leans leftward when turning to the left and leans rightward when turning to the right.

### BACKGROUND ART

A known gear-shift controller controls a gear-shift of a transmission of a motorcycle. As such a gear-shift controller, Patent Document 1, for example, discloses a gear-shift controller that controls a gear-shift of an automatic gear-shift mechanism including a dog clutch type transmission having a plurality of transmission gear stages and an actuator for changing the transmission gear stages of the transmission.

US 2008/077301 A1 discloses the features of the preamble of claim 1.

### CITATION LIST

### PATENT DOCUMENT

Patent Document 1: Japanese Patent Application Publication No. 2012-197809

### SUMMARY OF INVENTION

### TECHNICAL PROBLEM

In the leaning vehicle, including a multi-stage automatic transmission having a plurality of gear stages, as described in Patent Document 1, it is required to enhance controllability of a posture during turning in a vehicle state in which it is predicted that the leaning vehicle changes from a leftward lean state to a rightward lean state through a state where the lean angle is zero degrees or a vehicle state where it is predicted that the leaning vehicle changes from the rightward lean state to the leftward lean state through the state where the lean angle is zero degrees.

It is therefore an object of the present teaching to provide a leaning vehicle including a multi-stage automatic transmission and that is capable of enhancing controllability of a posture during turning of the leaning vehicle while the leaning vehicle is turning in a vehicle state where it is predicted that the leaning vehicle changes from a leftward lean state to a rightward lean state through a state where the lean angle is zero degrees or a vehicle state where it is predicted that the leaning vehicle changes from the rightward lean state to the leftward lean state through the state where the lean angle is zero degrees.

### SOLUTION TO PROBLEM

An inventor of the present teaching has studied a leaning vehicle including a multi-stage automatic transmission and that is capable of controlling a posture of the leaning vehicle during turning while the leaning vehicle is turning in a lean state.

Through an intensive study, the inventor of the present teaching has reached the following configuration.

A leaning vehicle according to one embodiment of the present teaching is a leaning vehicle that leans leftward when turning to the left and leans rightward when turning to the right. The leaning vehicle includes: a vehicle body; a plurality of wheels including a front wheel and a rear wheel; a driving source configured to supply a driving force to at least one of the front wheel or the rear wheel; a gear-type multi-stage automatic transmission including a plurality of gear stages and a clutch and configured to change the driving force to be transferred from the driving source to at least one of the front wheel or the rear wheel by automatically changing the plurality of gear stages stepwise; a lean angular velocity detector configured to detect a lean angular velocity while the vehicle body leans leftward or the vehicle body leans rightward; an accelerator operator to which an input operation for controlling an output of the driving source is performed; and a multi-stage automatic gear-shift controller configured to control changing of the plurality of gear stages in the multi-stage automatic transmission and to control the output of the driving source in accordance with the input operation to the accelerator operator. The multi-stage automatic gear-shift controller changes the output of the driving source in accordance with an operation amount of the accelerator operator, while holding the gear stages in the multi-stage automatic transmission, based on a vehicle state where it is predicted that the leaning vehicle changes from a leftward lean state to a rightward lean state through a state where a lean angle obtained from a lean angular velocity detected by the lean angular velocity detector is zero degrees or a vehicle state where it is predicted that the leaning vehicle changes from the rightward lean state to the leftward lean state through the state where the lean angle obtained from a lean angular velocity detected by the lean angular velocity detector is zero degrees.

In a case where the vehicle body of it is predicted that the leaning vehicle changes from the leftward lean state to the rightward lean state through the state where the lean angle is zero degrees or a case where vehicle body of it is predicted that the leaning vehicle changes from the rightward lean state to the leftward lean state through state where the lean angle is zero degrees, when the plurality of gear stages in the multi-stage automatic transmission are changed in accordance with an operation amount of the accelerator operator, the posture of the leaning vehicle during turning might change.

On the other hand, as in the configuration described above, in the vehicle state where it is predicted that the leaning vehicle changes from the leftward lean state to the rightward lean state through the state where the lean angle is zero degrees or the vehicle state where it is predicted that the leaning vehicle changes from the rightward lean state to the leftward lean state through the state where the lean angle is zero degrees, the plurality of gear stages in the multi-stage automatic transmission are held so that a posture change during turning occurring in the leaning vehicle by changing of the plurality of gear stages in the multi-stage automatic transmission can be reduced.

In addition, even in the case where the plurality of gear stages in the multi-stage automatic transmission are held as described above, the posture of the leaning vehicle during turning can be controlled in accordance with the operation amount of the accelerator operator by controlling an output of the driving source in accordance with the operation amount of the accelerator operator.

Thus, in the vehicle state where it is predicted that the leaning vehicle changes from the leftward lean state to the rightward lean state through the state where the lean angle is zero degrees or the vehicle state where it is predicted that the leaning vehicle changes from the rightward lean state to the leftward lean state through the state where the lean angle is zero degrees, the posture of the leaning vehicle during turning can be controlled in accordance with the operation amount of the accelerator operator while a posture change occurring in the leaning vehicle by changing the plurality of gear stages in the multi-stage automatic transmission is reduced.

In another aspect, the leaning vehicle according to the present teaching preferably includes the following configurations. If the lean angle obtained from the lean angular velocity while the leaning vehicle leans leftward is included in a range from a leftward lean angle threshold to a lean angle of zero degrees, the lean angle of the leaning vehicle changes toward the lean angle of zero degrees, and the lean angular velocity exceeds a lean angular velocity threshold, the multi-stage automatic gear-shift controller predicts that the leaning vehicle changes from the leftward lean state to the rightward lean state through the state where the lean angle is zero degrees, or if the lean angle while the leaning vehicle leans rightward is included in a range from a rightward lean angle threshold to the lean angle of zero degrees, the lean angle of the leaning vehicle changes toward the lean angle of zero degrees, and the lean angular velocity exceeds the lean angular velocity threshold, the multi-stage automatic gear-shift controller predicts that the leaning vehicle changes from the rightward lean state to the leftward lean state through the state where the lean angle is zero degrees.

In the leaning vehicle in which the lean angle changes from the leftward lean state toward the lean angle of zero degrees, if the lean angle is included in the range from the leftward lean angle threshold toward the lean angle of zero degrees, the lean angle of the leaning vehicle changes toward the lean angle of zero degrees, and the lean angular velocity exceeds the lean angular velocity threshold, it is highly likely that the lean angle of the leaning vehicle is not maintained in the state of being at the lean angle of zero degrees and the leaning vehicle leans rightward continuously. Similarly, in the leaning vehicle in which the lean angle changes from the rightward lean state toward the lean angle of zero degrees, if the lean angle is included in the range from the rightward lean angle threshold to the lean angle of zero degrees, the lean angle of the leaning vehicle changes toward the lean angle of zero degrees, and the lean angular velocity exceeds the lean angular velocity threshold, it is highly likely that the lean angle of the leaning vehicle is not maintained in the state of being at the lean angle of zero degrees and the leaning vehicle leans leftward continuously.

Thus, if the lean angle obtained from the lean angular velocity in the state where the leaning vehicle leans leftward is included in the range from the leftward lean angle threshold to the lean angle of zero degrees, the lean angle of the leaning vehicle changes toward the lean angle of zero degrees, and the lean angular velocity exceeds the lean angular velocity threshold, the multi-stage automatic gear-shift controller predicts that the leaning vehicle changes from the leftward lean state to the rightward lean state through the state where the lean angle is zero degrees. If the lean angle in the state where the leaning vehicle leans rightward is included in the range from the rightward lean angle threshold to the lean angle of zero degrees, the lean angle of the leaning vehicle changes toward the lean angle of zero degrees, and the lean angular velocity exceeds the lean angular velocity threshold, the multi-stage automatic gear-shift controller predicts that the leaning vehicle changes from the rightward lean state to the leftward lean state through the lean angle of zero degrees.

Accordingly, the multi-stage automatic gear-shift controller can hold the gear stages in the multi-stage automatic transmission before the leaning vehicle changes to a lean state through the state where the lean angle is zero degrees. Thus, while the vehicle body of the leaning vehicle is turning in a lean state where posture control during turning is difficult, a posture change occurring in the leaning vehicle by changing the plurality of gear stages can be more reliably reduced.

In another aspect, the leaning vehicle according to the present teaching preferably includes the following configurations. The leaning vehicle further includes a steering device configured to steer at least one of the front wheel or the rear wheel. If the lean angular velocity detected by the lean angular velocity detector exceeds the lean angular velocity threshold, the multi-stage automatic gear-shift controller holds the plurality of gear stages in the multi-stage automatic transmission, irrespective of a physical quantity concerning steering in the steering device.

If it is predicted that the leaning vehicle changes from the leftward lean state to the rightward lean state through the state where the lean angle is zero degrees, or if it is predicted that the leaning vehicle changes from the rightward lean state to the leftward lean state through the state where the lean angle is zero degrees, the plurality of gear stages in the multi-stage automatic transmission are held irrespective of a physical quantity concerning steering of the steering device so that a posture change occurring in the leaning vehicle can thereby be more reliably reduced.

In another aspect, the leaning vehicle according to the present teaching preferably includes the following configurations. If the lean angular velocity detected by the lean angular velocity detector is maintained for a predetermined time in a state less than or equal to the lean angular velocity threshold while the plurality of gear stages in the multi-stage automatic transmission are held, the multi-stage automatic gear-shift controller permits changing of the plurality of gear stages in the multi-stage automatic transmission.

In the multi-stage automatic gear-shift controller, in the state where the plurality of gear stages in the multi-stage automatic transmission are held, if the lean angular velocity detected by the lean angular velocity detector is maintained for the predetermined time in a state less than or equal to the lean angular velocity threshold, it is determined that the leaning vehicle does not change from the leftward lean state to the rightward lean state through the state where the lean angle is zero degrees or that the leaning vehicle does not change from the rightward lean state to the leftward lean state through the lean angle is zero degrees. That is, in the multi-stage automatic gear-shift controller, if the lean angular velocity is maintained for the predetermined time in the state less than or equal to the lean angular velocity threshold with the plurality of gear stages being held, it is determined that a lean operation on the leaning vehicle is completed at the time when the leaning vehicle changes from a lean state to the state where the lean angle is zero degrees.

The multi-stage automatic gear-shift controller determines that the influence of a posture change occurring in the leaning vehicle by changing of the plurality of gear stages is small, and permits changing of the plurality of gear stages in the multi-stage automatic transmission. Thus, if the multi-stage automatic gear-shift controller determines that the vehicle body of the leaning vehicle does not turn in a lean state where posture control during turning is difficult, the multi-stage automatic gear-shift controller permits changing of the plurality of gear stages. Thus, convenience for a driver can be maintained.

The terminology used herein is for the purpose of describing particular embodiments only and is not intended to be limiting of the invention.

As used herein, the term "and/or" includes any and all combinations of one or more of the associated listed items.

It will be further understood that the terms "including," "comprising" or "having" and variations thereof when used in this specification, specify the presence of stated features, steps, operations, elements, components, and/or their equivalents but do not preclude the presence or addition of one or more other features, steps, operations, elements, components, and/or groups thereof.

It will be further understood that the terms "mounted," "connected," "coupled," and/or their equivalents are used broadly and encompass both direct and indirect mounting, connecting and coupling. Further, "connected" and "coupled" are not restricted to physical or mechanical connections or couplings, and can include electrical connections or couplings, whether direct or indirect.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques.

In this specification, embodiments of a leaning vehicle according to the present teaching will be described.

In the following description, for purposes of explanation, numerous specific details are set forth in order to provide a thorough understanding of the present invention. It will be evident, however, to one skilled in the art that the present invention may be practiced without these specific details.

The present disclosure is to be considered as an exemplification of the invention, and is not intended to limit the invention to the specific embodiments illustrated by the figures or description below.

### [Leaning Vehicle]

A leaning vehicle herein is a vehicle that turns in a leaning posture. Specifically, the leaning vehicle is a vehicle that leans leftward when turning to the left and leans rightward when turning to the right in the left-right direction of the vehicle. The leaning vehicle may be a single-passenger vehicle or a vehicle on which a plurality of passengers can ride. The leaning vehicle includes all the types of vehicles that turn in leaning postures, such as three-wheeled vehicles and four-wheeled vehicles as well as two-wheeled vehicles.

### [Driving Source]

A driving source herein refers to a device that applies a driving force to wheels. The driving source includes, for example, a device capable of applying a rotation driving force, such as an engine, a motor, and a hybrid system combining an engine and a motor.

### [Automatic Transmission]

An automatic transmission herein refers to a device that performs a gear-shift based on a signal generated by a gear-shift controller. Thus, the automatic transmission performs a gear-shift without a gear-shift by a driver of the vehicle.

### [Accelerator Operator]

An accelerator operator herein refers to an operator to which an input operation is performed by a driver of a vehicle in order to adjust an output of the driving source. The accelerator operator includes, for example, a throttle grip provided in a handle.

### [Lean Angular Velocity]

A lean angular velocity herein refers to a value representing the speed of change of a lean angle in the leaning vehicle, that is, an angular velocity of the lean angle, while the leaning vehicle is turning in a lean state. The lean angle refers to an angle formed by the vertical line to the road surface and the up-down direction reference line of the leaning vehicle while the leaning vehicle is turning in a lean state in which the leaning vehicle leans leftward or rightward about the tilt axis with respect to the vertical line to the road surface. The up-down direction reference line is a reference line extending in the up-down direction of the leaning vehicle.

### [Physical Quantity Concerning Steering]

A physical quantity concerning steering herein includes, for example, a steering amount and a steering rate in a steering device. The steering rate is a value representing the speed of change in the steering amount, that is, a value obtained by dividing the amount of change of the steering amount by time.

### ADVANTAGEOUS EFFECTS OF INVENTION

An embodiment of the present teaching can provide a leaning vehicle including a multi-stage automatic transmission and capable of enhancing controllability of a posture during turning of the leaning vehicle while the leaning vehicle is turning in a lean state.

### BRIEF DESCRIPTION OF DRAWINGS

[FIG. 1] FIG. 1 is a left side view of a vehicle according to a first embodiment.
[FIG. 2] FIG. 2 is a cross-sectional view illustrating a schematic configuration of a multi-stage automatic transmission.
[FIG. 3] FIG. 3 is a cross-sectional view illustrating a schematic configuration of a shift mechanism.
[FIG. 4] FIG. 4 is a view illustrating a vehicle that turns leftward when seen from the front.
[FIG. 5] FIG. 5 is a block diagram illustrating a schematic configuration of a controller.
[FIG. 6] FIG. 6 is a chart showing an operation flow of gear-shift control by the controller.
[FIG. 7] FIG. 7 is a view illustrating a schematic configuration of a vehicle according to a second embodiment and corresponding to FIG. 5.
[FIG. 8] FIG. 8 is a chart showing an operation flow of gear-shift control by the controller and corresponding to FIG. 6.
[FIG. 9] FIG. 9 is a view illustrating a multi-stage automatic transmission of a vehicle according to a third embodiment and corresponding to FIG. 2.
[FIG. 10] FIG. 10 is a view schematically illustrating a configuration of the multi-stage automatic transmission.
[FIG. 11] FIG. 11 shows examples of a left side view of a vehicle, a cross-sectional view of a multi-stage automatic transmission, and a block diagram of a controller.

### DESCRIPTION OF EMBODIMENT

Embodiments will be described hereinafter with reference to the drawings. The dimensions of components in the drawings do not strictly represent actual dimensions of the components and dimensional proportions of the components, for example.

In the following description, arrow F in the drawings represents a forward direction of a vehicle. Arrow RR in the drawings represents a rearward direction of the vehicle. Arrow U in the drawings represents an upward direction of the vehicle. Arrow R in the drawings represents a rightward direction of the vehicle. Arrow L in the drawings represents a leftward direction of the vehicle. The front, rear, left, and right directions respectively refer to the front, rear, left, and right directions when seen from a driver driving the vehicle.

### [First Embodiment]

### <Overall Configuration>

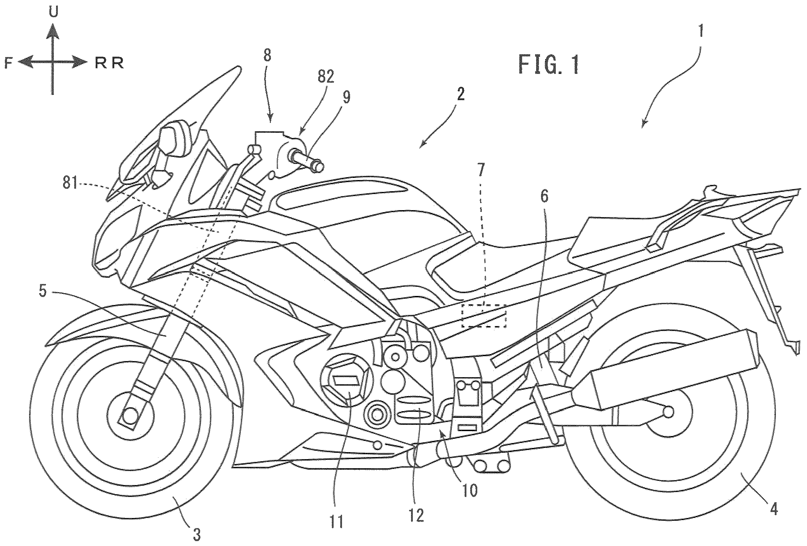

FIG. 1 illustrates a left side view of a vehicle 1 according to an embodiment of the present teaching. The vehicle 1 is, for example, a motorcycle. Specifically, the vehicle 1 is a leaning vehicle that leans leftward when turning to the left and turns rightward when turning to the right.

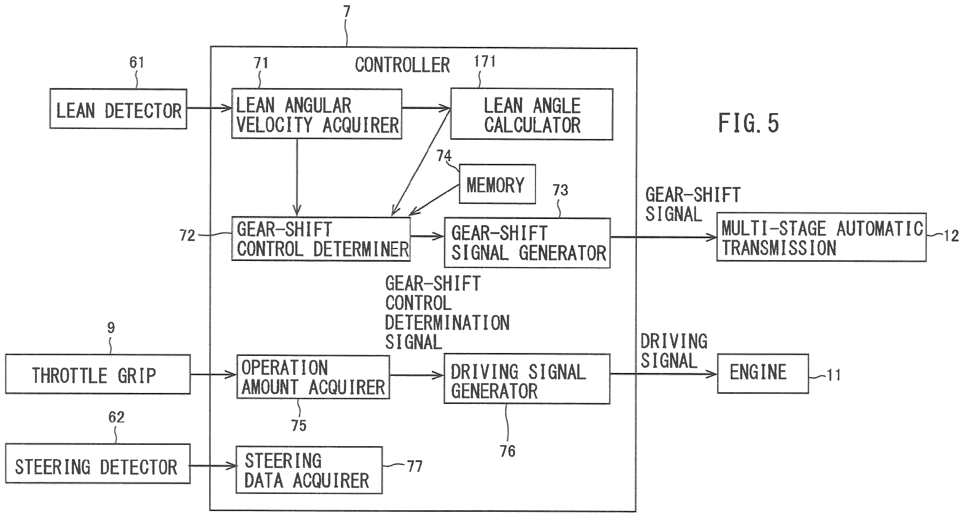

The vehicle 1 includes a vehicle body 2, a front wheel 3, a rear wheel 4, a front suspension 5, a rear suspension 6, a controller 7, a steering device 8, a throttle grip 9 (accelerator operator), a lean detector 61, a steering detector 62, and an engine unit 10. The lean detector 61 and the steering detector 62 are illustrated in FIG. 5.

The vehicle body 2 includes a frame, not shown. The frame of the vehicle body 2 is connected to the front suspension 5 supporting the vehicle body 2 to the front wheel 3, and to the rear suspension 6 supporting the vehicle body 2 to the rear wheel 4. The front suspension 5 elastically supports the vehicle body 2 to the front wheel 3 and generates a damping force. The rear suspension 6 elastically supports the vehicle body 2 to the rear wheel 4 and generates a damping force.

The steering device 8 is disposed in a front portion of the vehicle body 2. The steering device 8 steers the front wheel 3 leftward or rightward. The steering device 8 includes a steering shaft 81 connected to an upper portion of the front suspension 5 and a handle 82 connected to the upper end of the steering shaft 81. The steering shaft 81 is supported by a head pipe, not shown, in a front portion of the frame and is rotatable about an axis.

In the steering device 8 having the configuration described above, when a driver steers the handle 82 leftward or rightward so that the steering shaft 81 thereby rotates about the axis. Accordingly, the front wheel 3 is steered leftward or rightward through the front suspension 5.

A physical quantity concerning steering in the steering device 8 is detected by the steering detector 62. The physical quantity concerning steering includes, for example, a steering amount and a steering rate in the steering device 8. The steering detector 62 is, for example, a sensor for detecting a rotation angle (steering amount) or a rotation angular velocity (steering rate) of the steering shaft 81 of the steering device 8. Data on the physical quantity concerning steering detected by the steering detector 62 is input to the controller 7.

The handle 82 is provided with the throttle grip 9 (accelerator operator). The throttle grip 9 is, for example, a tubular member and covers a handlebar, not shown, of the handle 82. In a case where the throttle grip 9 rotates with respect to the bar by an operation of the driver, information on this rotation is sent to the controller 7 as throttle operation information. Based on the throttle operation information sent to the controller 7, the controller 7 controls an opening degree (throttle opening degree) of a throttle valve, not shown, of the engine unit 10. The throttle valve is a valve for adjusting the amount of air flowing into an engine 11 described later of the engine unit 10 in order to adjust a driving force generated in the engine 11. The throttle opening degree may be directly adjusted with the throttle grip 9 using a wire or the like.

The engine unit 10 for supplying a rotation driving force to the rear wheel 4 is attached to the frame of the vehicle body 2. The engine unit 10 includes an engine 11 as a driving source, and a multi-stage automatic transmission 12 that shifts the speed of rotation output from the engine 11. The configuration of the engine unit 10 will be specifically described later.

The controller 7 for controlling driving of the engine unit 10 is disposed in the vehicle body 2. The controller 7 is a so-called electric control unit (ECU), and controls driving of other components in the vehicle 1 as well as the engine unit 10.

The lean detector 61 is also disposed in the vehicle body 2. The lean detector 61 detects information on a leaning posture of the vehicle 1. In this embodiment, the lean detector 61 is, for example, an inertial measurement unit (IMU), and detects a lean angular velocity when the vehicle 1 leans leftward or rightward. That is, the lean detector 61 functions as a lean angular velocity detector.

The lean detector 61 may detect at least one of an angular velocity (pitch angular velocity) when the vehicle 1 rotates forward or rearward about a rotation axis extending in the left-right direction of the vehicle 1 or an angular velocity (yaw angular velocity) when the vehicle 1 rotates about the vertical axis when seen from above.

### <Engine Unit>

Next, a configuration of the engine unit 10 will be described.

The engine unit 10 includes the engine 11 and the multi-stage automatic transmission 12. A driving force generated in the engine 11 changes by adjusting the throttle opening degree in accordance with an operation of the throttle grip 9. The engine 11 has a configuration similar to that of a typical engine. Thus, the engine 11 will not be described in detail.

The multi-stage automatic transmission 12 includes a plurality of gear stages and automatically changes the gear stages stepwise to thereby change a driving force to be transferred from the engine 11 to the rear wheel 4. Specifically, the multi-stage automatic transmission 12 includes a transmission mechanism 20, a clutch 40, and a shift mechanism 50.

The term of automatically changing the gear stages stepwise refers to changing to a next gear stage having a large gear-shift ratio or a next gear stage having a small gear-shift ratio without a gear-shift operation by a driver of the vehicle 1. At this time, an instruction signal instructing changing of the gear stages may be input, or may not be input, from the driver of the vehicle 1to the multi-stage automatic transmission 12.

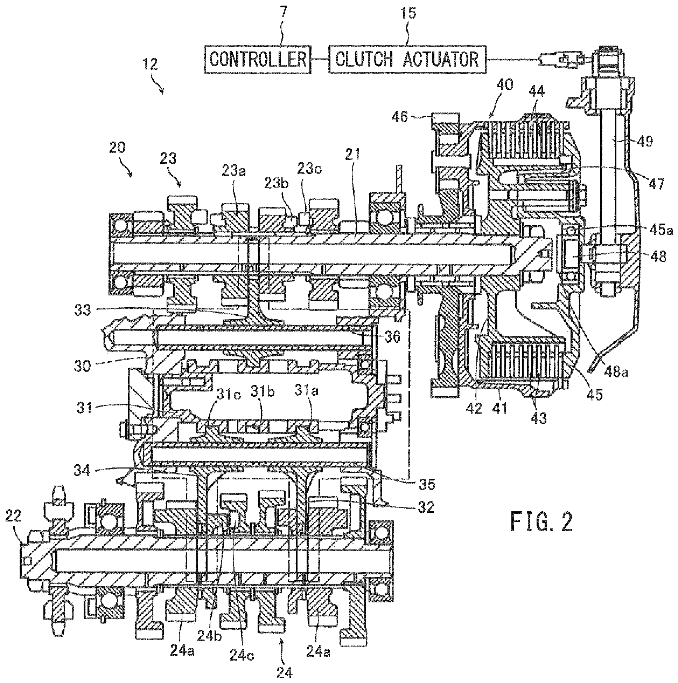

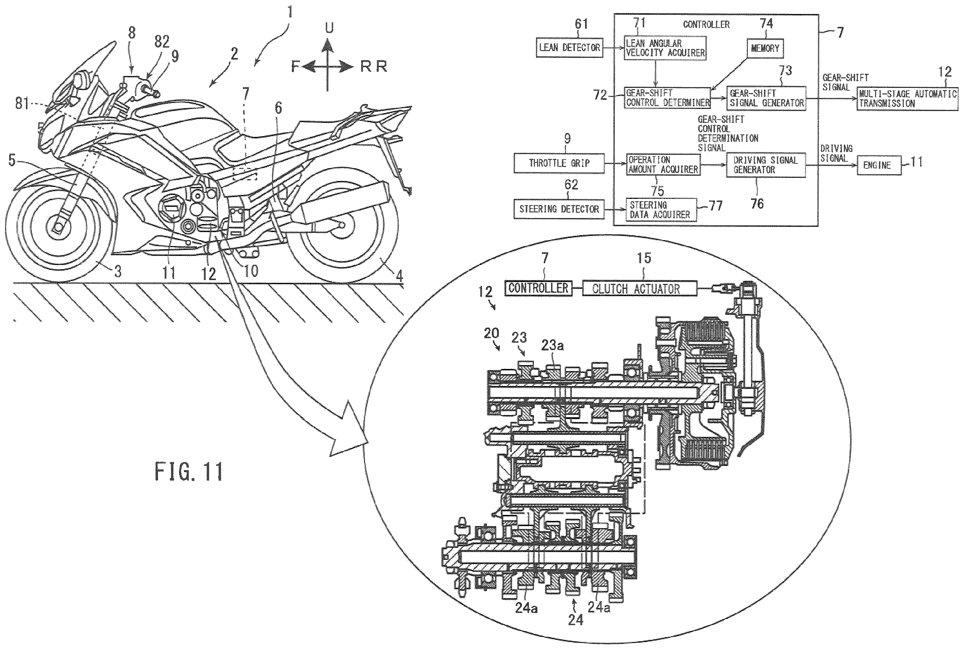

FIG. 2 illustrates schematic configurations of the transmission mechanism 20 and the clutch 40 of the multi-stage automatic transmission 12. FIG. 11 illustrates schematic configurations of the vehicle 1 and the multi-stage automatic transmission 12. FIG. 11 also illustrates a block diagram of the controller 7 described later. Since FIG. 11 corresponds to FIGS. 1, 2, and 5, detailed description of FIG. 11 will be omitted.

The transmission mechanism 20 is connected to a crankshaft, not shown, of the engine 11. The transmission mechanism 20 changes a torque transferred from the crankshaft to a predetermined torque, and outputs the predetermined torque.

The clutch 40 is configured to transmit rotation of the crankshaft to the transmission mechanism 20. That is, the clutch 40 is configured to switch between transfer and non-transfer of rotation of the crankshaft to the transmission mechanism 20.

The shift mechanism 50 performs a gear-shift of the transmission mechanism 20 through a sequential shift mechanism 30 described later, and retains a gear stage selected by the transmission mechanism 20 until the next gear-shift is performed by the transmission mechanism 20.

As described above, a driving force is transferred to the transmission mechanism 20 of the multi-stage automatic transmission 12 from the engine 11 through the clutch 40.

The configuration of the multi-stage automatic transmission 12 including the transmission mechanism 20, the clutch 40, and the shift mechanism 50 will be described in detail.

The clutch 40 is, for example, a multiplate friction clutch. The clutch 40 includes a bottomed cylindrical clutch housing 41, a bottomed cylindrical clutch boss 42, a plurality of friction plates 43 and a plurality of clutch plates 44 that are friction discs, a pressure plate 45, and an input gear 46. The clutch 40 is not limited to a multiplate clutch as described in this embodiment. The clutch 40 may be an automatic centrifugal clutch using a centrifugal weight.

The clutch housing 41 is disposed concentrically with a main shaft 21 of the transmission mechanism 20 and is rotatable relative to the main shaft 21. A bottom portion of the bottomed cylindrical clutch housing 41 is connected to the input gear 46. The input gear 46 meshes with a gear (not shown) disposed on the crankshaft of the engine 11 to thereby rotate together with the gear. The clutch housing 41 and the input gear 46 rotate together with the crankshaft, and are rotatable with respect to the main shaft 21 of the transmission mechanism 20.

The plurality of friction plates 43 as ring-shaped thin plates are arranged inside the clutch housing 41. The plurality of friction plates 43 are arranged in the thickness direction inside the clutch housing 41. The plurality of friction plates 43 are attached to the inner peripheral surface of the clutch housing 41 to be rotatable together with the clutch housing 41 and displaceable with respect to the clutch housing 41 along the axial direction of the main shaft 21.

An end portion of the main shaft 21 penetrates the bottom portion of the clutch housing 41. A bottom portion of the clutch boss 42 is fixed to a front end portion of the main shaft 21 penetrating the clutch housing 41. Accordingly, the clutch boss 42 rotates together with the main shaft 21.

The clutch boss 42 is disposed inside the clutch housing 41. The plurality of clutch plates 44 as ring-shaped thin plates are disposed on an outer peripheral portion of the clutch boss 42. That is, the plurality of clutch plates 44 are attached to the outer peripheral surface of the clutch boss 42 to be rotatable together with the clutch boss 42 and displaceable with respect to the clutch boss 42 along the axial direction of the main shaft 21.

The plurality of friction plates 43 and the plurality of clutch plates 44 are alternately arranged along the axial direction of the main shaft 21.

The pressure plate 45 is a substantially disc-shaped member. The clutch housing 41, the clutch boss 42, and the pressure plate 45 are arranged in this order with respect to the main shaft 21 along the axial direction of the main shaft 21. The pressure plate 45 is disposed outside the main shaft 21 in the axial direction to face the clutch boss 42 in the axial direction. The pressure plate 45 is displaceable with respect to the clutch boss 42 along the axial direction of the main shaft 21. The pressure plate 45 is pressed by a clutch spring 47 toward the clutch boss 42.

As described above, when the pressure plate 45 is pressed toward the clutch boss 42, each of the friction plates 43 and each of the clutch plates 44 are thereby pushed against each other in the thickness direction. That is, the plurality of friction plates 43 and the plurality of clutch plates 44 are engaged with one another. As described above, while the plurality of friction plates 43 and the plurality of clutch plates 44 are engaged, the clutch boss 42 and the clutch housing 41 rotate together by friction between the friction plates 43 and the clutch plates 44. This state is an engaged state of the clutch 40.

In this engaged state of the clutch 40, rotation is allowed to be transferred from the clutch housing 41 to the clutch boss 42, that is, from the input gear 46 to the main shaft 21, through each of the friction plates 43 and each of the clutch plates 44.

A push rod 48 penetrates a center portion of the pressure plate 45 when seen in the axial direction of the main shaft 21. The push rod 48 is disposed to extend in the axial direction of the main shaft 21. That is, the axial direction of the push rod 48 coincides with the axial direction of the main shaft 21. A flange 48a is provided on one end of the push rod 48. The other end of the push rod 48 is connected to a rod 49. The rod 49 is rotatable about the axis by a clutch actuator 15. The clutch actuator 15 is controlled to be driven based on a clutch signal output from the controller 7.

The push rod 48 is configured to be movable along the axial direction of the main shaft 21 by rotation of the rod 49. In a case where the push rod 48 moves in a direction away from the main shaft 21 (rightward in FIG. 2), the pressure plate 45 receives a force in a direction away from the clutch boss 42 in the axial direction by the flange 48a of the push rod 48. Accordingly, the clutch spring 47 is deformed to be compressed. Thus, a force with which the pressure plate 45 pushes the friction plates 43 and the clutch plates 44 decreases.

Consequently, a contact pressure between the friction plates 43 and the clutch plates 44 decreases. In this manner, the friction plates 43 and the clutch plates 44 are disengaged, and the clutch boss 42 and the clutch housing 41 rotate relative to each other. This state is a disengaged state of the clutch 40.

That is, the clutch 40 is switched between the engaged state and the disengaged state by movement of the push rod 48 along the axial direction of the main shaft 21.

The pressure plate 45 is rotatable about the push rod 48 with a bearing 45a interposed therebetween. Accordingly, while the clutch 40 is in the engaged state, the pressure plate 45 rotates together with the clutch housing 41 and the clutch boss 42.

The transmission mechanism 20 is a multistep transmission mechanism. The transmission mechanism 20 includes the main shaft 21, an output shaft 22 disposed in parallel with the main shaft 21, a plurality of driving gears 23, a plurality of driven gears 24, and the sequential shift mechanism 30. The sequential shift mechanism 30 includes a shift cam 31, shift forks 32 through 34, and guide shafts 35 and 36 for guiding movement of the shift forks 32 through 34.

The main shaft 21 is provided with the plurality of driving gears 23. The plurality of driving gears 23 are transmission gears constituting part of the plurality of gear stages. The output shaft 22 is provided with the plurality of driven gears 24 always meshing with the plurality of driving gears 23. The plurality of driven gears 24 are transmission gears constituting part of the plurality of gear stages. The transmission mechanism 20 is a so-called gear-type transmission mechanism in which the plurality of driving gears 23 and the plurality of driven gears 24 always mesh with each other in a one-to-one relationship.

In the transmission mechanism 20, in accordance with the gear stage, the sequential shift mechanism 30 selects a combination of a driving gear 23 and a driven gear 24 for transferring a driving force among the plurality of driving gears 23 and the plurality of driven gears 24.

Specifically, a predetermined driving gear 23a in the plurality of driving gears 23 is fixed to the main shaft 21 in the rotation direction, while being movable along the axial direction of the main shaft 21. Predetermined driven gears 24a in the plurality of driven gears 24 are fixed to the output shaft 22 in the rotation direction, while being movable along the axial direction of the output shaft 22. Positions of the predetermined driving gear 23a and the predetermined driven gears 24a in the axial direction are determined by the sequential shift mechanism 30 in accordance with the gear stage.

The driving gears 23 except for the predetermined driving gear 23a in the plurality of driving gears 23 include driving gears 23 fixed to the main shaft 21 in the axial direction and rotatable with respect to the main shaft 21, and driving gears 23 fixed to the main shaft 21 in the axial direction and rotatable together with the main shaft 21. Driven gears 24, except for the predetermined driven gears 24a in the plurality of driven gears 24, are fixed to the output shaft 22 in the axial direction and rotatable with respect to the output shaft 22.

A configuration of the transmission mechanism 20 is similar to a configuration of a known transmission mechanism (e.g., Japanese Patent Application Publication No. 2015-117798), and thus, will not be described in detail.

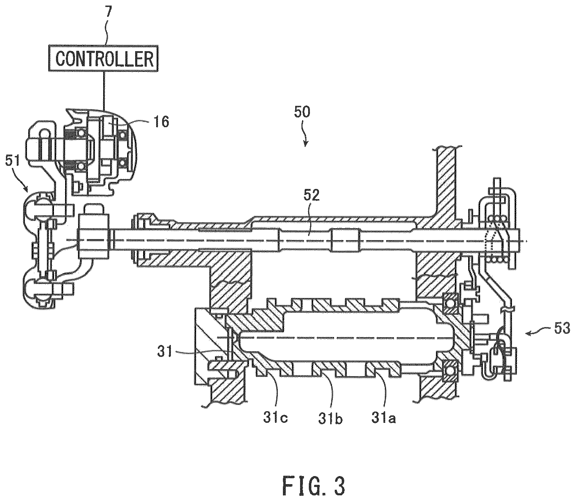

The sequential shift mechanism 30 includes the shift cam 31 and the shift forks 32 through 34. As illustrated in FIG. 3, cam grooves 31a through 31c are formed on the outer peripheral surface of the shift cam 31 of the sequential shift mechanism 30. The cam grooves 31a through 31c are arranged along the axial direction of the shift cam 31 such that each of the cam grooves 31a through 31c extends circumferentially on the outer peripheral surface of the shift cam 31. Configurations of the cam grooves 31a through 31c of this embodiment are similar to those of known cam grooves (e.g., Japanese Patent Application Publication No. 2015-117798), and thus, will not be described in detail. The cam grooves 31a through 31c are arranged on the outer peripheral surface of the shift cam 31 such that positions of the cam grooves 31a through 31c in the axial direction of the shift cam 31 change in accordance with the positions thereof in the circumferential direction of the shift cam 31. One end of each of the shift forks 32 through 34 is located in an associated one of the cam grooves 31a through 31c.

As illustrated in FIG. 2, the shift forks 32 through 34 are disposed on the guide shafts 35 and 36 parallel to the axis of the shift cam 31 and are movable along the axial direction of the guide shafts 35 and 36. The other end of each of the shift forks 32 through 34 is connected to the predetermined driving gear 23a and the predetermined driven gears 24a. Accordingly, when the shift cam 31 rotates, the shift forks 32 through 34 move in the axial direction of the shift cam 31 along the cam grooves 31a through 31c on the outer peripheral surface of the shift cam 31. Thus, with the rotation of the shift cam 31, positions of the predetermined driving gear 23a and the predetermined driven gears 24a in the axial direction are determined through the shift forks 32 through 34.

The predetermined driving gear 23a and the driving gear 23 adjacent to the predetermined driving gear 23b in the axial direction of the main shaft 21 respectively include dogs 23b and 23c that mesh with each other. Each of the predetermined driven gears 24a and the driven gears 24 adjacent to the predetermined driven gear 24a in the axial direction of the output shaft 22 respectively include dogs 24b and 24c that mesh with each other. As described above, with rotation of the shift cam 31, when the predetermined driving gear 23a moves along the axial direction through the shift fork 33, the dog 23b of the predetermined driving gear 23a meshes with the dog 23c of the driving gear 23 adjacent to the predetermined driving gear 23a in the axial direction of the main shaft 21. With the rotation of the shift cam 31, when each of the predetermined driven gears 24a moves along the axial direction through its corresponding one of the shift forks 32 or 34, the dog 24b of the predetermined driven gear 24a meshes with the dog 24c of the driven gear 24 adjacent to the predetermined driven gear 24a in the axial direction of the output shaft 22.

Accordingly, a combination of the driving gear 23 and the driven gear 24 for transferring a driving force from the main shaft 21 to the output shaft 22 is selected. That is, in the transmission mechanism 20, in a case where the predetermined driving gear 23a moves along the axial direction through the shift fork 33 in accordance with rotation of the shift cam 31, the driving gear 23 associated with a specific gear stage (i.e., gear stage except for the predetermined gear stage) in the plurality of driving gears 23 is fixed to the main shaft 21 by the predetermined driving gear 23a to rotate together with the main shaft 21. On the other hand, in a case where the predetermined driven gear 24a moves along the axial direction through the shift forks 32 and 34 in accordance with rotation of the shift cam 31, the driven gear 24 associated with a specific gear stage (e.g., gear stage except for the predetermined gear stage) in the plurality of driven gears 24 is fixed to the output shaft 22 by the predetermined driven gear 24a to rotate together with the output shaft 22.

In the manner described above, only the driving gear 23 and the driven gear 24 associated with the specific gear stage in the transmission mechanism 20 transfer a driving force from the main shaft 21 to the output shaft 22. Accordingly, the transmission mechanism 20 transfers a driving force output from the engine 11 from the main shaft 21 to the output shaft 22 at a predetermined gear-shift ratio in each gear stage.

FIG. 3 illustrates a schematic configuration of the shift mechanism 50 of the multi-stage automatic transmission 12. The shift mechanism 50 causes the shift cam 31 of the transmission mechanism 20 to rotate in accordance with a gear-shift signal output from the controller 7. The shift mechanism 50 is driven by a shift actuator 16. The shift actuator 16 is controlled and driven based on a gear-shift signal output from the controller 7.

The shift mechanism 50 includes a shift rod 51, a shift shaft 52, and an intermittent feeder 53. A driving force of the shift actuator 16 is transferred to the shift rod 51. One end of the shift shaft 52 is connected to the shift rod 51, and the other end of the shift shaft 52 is connected to the shift cam 31 through the intermittent feeder 53. The shift actuator 16 causes the shift shaft 52 to rotate in a predetermined direction through the shift rod 51 based on a gear-shift signal output from the controller 7. This predetermined direction is switched in opposite directions between a shift-up (changing to a gear stage having a smaller gear-shift ratio) and a shift-down (changing to a gear stage having a larger gear-shift ratio).

The shift shaft 52 rotates with a driving force of the shift actuator 16 to thereby cause the shift cam 31 to rotate about the axis through the intermittent feeder 53. When the shift shaft 52 rotates in a predetermined direction, the intermittent feeder 53 causes the shift cam 31 to rotate by a certain angle in a rotation direction corresponding to the predetermined direction. A configuration of the intermittent feeder 53 is similar to a known configuration (e.g., Japanese Patent Application Publication No. 2015-117798). Thus, the configuration of the intermittent feeder 53 will not be described in detail.

With the configuration described above, when the shift actuator 16 is driven based on a gear-shift signal output from the controller 7, a driving force of the shift actuator 16 causes the shift shaft 52 to rotate in a predetermined direction through the shift rod 51. In accordance with the rotation direction of the shift shaft 52, the intermittent feeder 53 causes the shift cam 31 to rotate by a certain angle in a rotation direction corresponding to the predetermined direction.

Accordingly, in the transmission mechanism 20, the shift forks 32 through 34 move in the axial direction of the shift cam 31 along the cam grooves 31a through 31c on the shift cam 31. With such movement of the shift fork 33, the predetermined driving gear 23a and the driving gear 23 associated with the specific gear stage are engaged through the dogs 23b and 23c thereof. With movement of the shift forks 32 and 34, the predetermined driven gears 24a and the driven gear 24 associated with the specific gear stage are engaged through the dogs 24b and 24c thereof. Consequently, a driving force can be transferred at a gear-shift ratio of each gear stage from the main shaft 21 to the output shaft 22 through the driving gear 23 and the driven gear 24 associated with the gear stage.

### <Controller>

The controller 7 controls driving of each component of the vehicle 1, such as the engine unit 10. The controller 7 is, for example, an electric control unit (ECU). In this embodiment, the controller 7 generates a gear-shift signal for instructing changing of gear stages to the multi-stage automatic transmission 12, and outputs the gear-shift signal. The controller 7 of this embodiment controls driving of the multi-stage automatic transmission 12 based on a detection result of the lean detector 61. That is, the controller 7 constitutes a gear-shift controller.

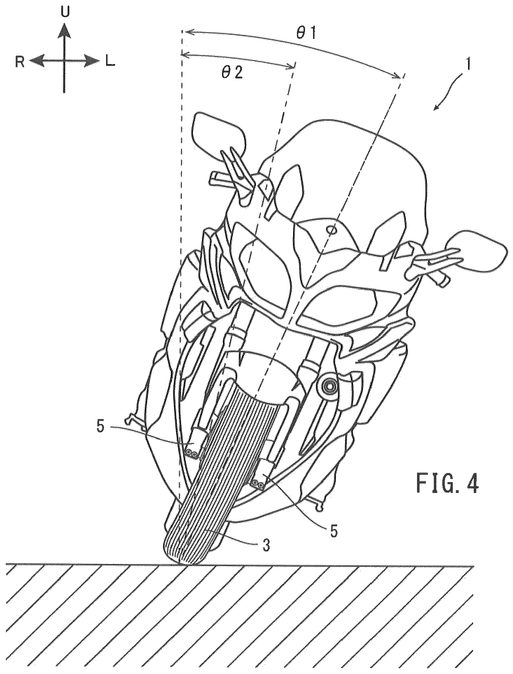

In this embodiment, the vehicle 1 leans leftward when turning to the left and leans rightward when turning to the right. FIG. 4 is a view of the vehicle 1 that turns leftward, when seen from the front. As illustrated in FIG. 4, while the vehicle 1 turns, the vehicle 1 leans at predetermined lean angles θ1 and θ2 with respect to a vertical axis (broken line in FIG. 4).

While the vehicle 1 leans leftward or rightward, the lean angle changes in accordance with a change of a driving force generated by an operation of the throttle grip 9. FIG. 4 shows a change of the lean angle of the vehicle 1 in accordance with an operation of the throttle grip 9 while the vehicle 1 turns leftward or rightward. θ1 in FIG. 4 is a lean angle of the vehicle 1 in a case where the operation amount of the throttle grip 9 is small, and θ2 in FIG. 4 is a lean angle of the vehicle 1 in a case where the operation amount of the throttle grip 9 is large.

As illustrated in FIG. 4, while the vehicle 1 turns leftward or rightward, a driving force transferred from the engine unit 10 to the rear wheel 4 is increased by increasing the operation amount of the throttle grip 9 so that the lean angle of the vehicle 1 becomes smaller than that in the case where the operation amount of the throttle grip 9 is small. On the other hand, a driving force transferred from the engine unit 10 to the rear wheel 4 is reduced by reducing the operation amount of the throttle grip 9 so that the lean angle of the vehicle 1 becomes larger than that in the case where the operation amount of the throttle grip 9 is large. That is, in the vehicle 1 that leans leftward when turning to the left and leans rightward when turning to the right, a driving force is changed in accordance with the operation amount of the throttle grip 9, thereby controlling leaning posture in turning.

When the gear stages of the multi-stage automatic transmission 12 are changed while the vehicle 1 turns leftward while leaning to the left or the vehicle 1 turns rightward while leaning to the right, a driving force output from the engine unit 10 changes. Then, the lean angle of the vehicle 1 changes while the vehicle 1 turns leftward or rightward.

For example, when the clutch 40 of the multi-stage automatic transmission 12 is disengaged, a driving force transferred from the engine unit 10 to the rear wheel 4 decreases. Thus, a centrifugal force applied to the vehicle 1 decreases so that the lean angle of the vehicle 1 increases.

Thereafter, when the gear stages in the multi-stage automatic transmission 12 are changed and the clutch 40 is engaged, a driving force transferred from the engine unit 10 to the rear wheel 4 increases. Accordingly, a centrifugal force applied to the vehicle 1 increases so that the lean angle of the vehicle 1 decreases.

In particular, in a case where the vehicle 1 changes from a leftward lean state to a rightward lean state through a state where the lean angle is zero degrees (i.e., the vehicle 1 does not lean) or a case where the vehicle 1 changes from the rightward lean state to the leftward lean state through the state where the lean angle is zero degrees (i.e., the vehicle 1 does not lean), a change of the driving force significantly affects a posture change of the vehicle 1.

For example, if the lean angle obtained from the lean angular velocity while the vehicle 1 leans leftward is included in a range from a leftward lean angle threshold to the lean angle of zero degrees, the lean angle of the vehicle 1 changes toward the lean angle of zero degrees, and the lean angular velocity exceeds the lean angular velocity threshold, it is predicted that the vehicle 1 changes from the leftward lean state to the rightward lean state through the state where the lean angle is zero degrees. On the other hand, if the lean angle while the vehicle 1 leans rightward is included in a range from the rightward lean angle threshold to the lean angle of zero degrees, the lean angle of the vehicle 1 changes toward the lean angle of zero degrees, and the lean angular velocity exceeds a lean angular velocity threshold, it is predicted that the leaning vehicle changes from the rightward lean state to the leftward lean state through the state where the lean angle is zero degrees.

In the vehicle 1 in which the lean angle changes from the leftward lean state toward the lean angle of zero degrees, if the lean angle is included in the range from the leftward lean angle threshold to the lean angle of zero degrees and the lean angular velocity of the vehicle 1 exceeds the lean angular velocity threshold, the vehicle 1 is highly likely to lean rightward across the lean angle of zero degrees because of, for example, an inertial effect and an intension of the driver. Similarly, in the vehicle 1 in which the lean angle changes from the rightward lean state toward the lean angle of zero degrees, if the lean angle is included in the range from the rightward lean angle threshold to the lean angle of zero degrees and the lean angular velocity of the vehicle 1 exceeds the lean angular velocity threshold, the vehicle 1 is highly likely to lean leftward across the lean angle of zero degrees because of, for example, an inertial effect and an intension of the driver.

That is, if the lean angle is included in a range near the lean angle of zero degrees, the lean angle of the vehicle 1 changes toward the lean angle of zero degrees, and the lean angular velocity exceeds the lean angular velocity threshold, it is highly likely that the lean angle is not held at zero degrees and the vehicle 1 leans leftward or rightward. As described above, if the vehicle 1 turns rightward from the leftward turning state or the vehicle 1 turns leftward from the rightward turning state, a change of a driving force significantly affects a posture change of the vehicle 1. In addition, when a posture change of the vehicle 1 occurs during turning of the vehicle 1, a change easily occurs in a travel line as a trajectory of travelling of the vehicle 1 during the turning. The range near the lean angle of zero degrees is, for example, a range from a leftward lean angle of 5 degrees to a rightward lean angle of 5 degrees, but is not limited to this range.

On the other hand, the controller 7 of this embodiment changes an output of the engine 11 in accordance with the operation amount of the throttle grip 9 while holding gear states in the multi-stage automatic transmission 12, based on the vehicle state where it is predicted that the leaning vehicle 1 changes from the leftward lean state to the rightward lean state through the state where the lean angle obtained from the lean angular velocity detected by the lean angular velocity detector is zero degrees or the vehicle state it is predicted that the vehicle 1 changes from the rightward lean state to the leftward lean state through the state where the lean angle is zero degrees.

That is, if the lean angle obtained from the lean angular velocity while the vehicle 1 leans leftward is included in the range from the leftward lean angle threshold to the lean angle of zero degrees, the lean angle of the vehicle 1 changes toward the lean angle of zero degrees, and the lean angular velocity exceeds the lean angular velocity threshold, it is predicted that the vehicle 1 changes from the leftward lean state to the rightward lean state through the state where the lean angle is zero degrees. On the other hand, if the lean angle while the vehicle 1 leans rightward is included in the range from the rightward lean angle threshold to the lean angle of zero degrees, the lean angle of the vehicle 1 changes toward the lean angle of zero degrees, and the lean angular velocity exceeds the lean angular velocity threshold, it is predicted that the leaning vehicle changes from the rightward lean state to the leftward lean state through the state where the lean angle is zero degrees. In this case, a change of a driving force significantly affects a posture change of the vehicle 1. Thus, the controller 7 changes an output of the engine 11 in accordance with the operation amount of the throttle grip 9 while holding gear stages in the multi-stage automatic transmission 12.

FIG. 5 is a block diagram of a schematic configuration of the controller 7. The controller 7 includes a lean angular velocity acquirer 71, a lean angle calculator 171, a gear-shift control determiner 72, a gear-shift signal generator 73, a memory 74, an operation amount acquirer 75, a driving signal generator 76, and a steering data acquirer 77.

The lean angular velocity acquirer 71 acquires a lean angular velocity of the vehicle 1 detected by the lean detector 61.

The lean angle calculator 171 calculates a lean angle from the lean angular velocity of the vehicle 1 acquired by the lean angular velocity acquirer 71. The lean angle calculator 171 calculates the lean angle by, for example, integrating the lean angular velocity over a predetermined period.

The gear-shift control determiner 72 determines whether or not to change gear stages in the multi-stage automatic transmission 12 from gear-shift control determination data previously stored in the memory 74, by using the lean angular velocity of the vehicle 1 acquired by the lean angular velocity acquirer 71.

The gear-shift control determination data is data for determining whether or not to permit changing gear stages in the multi-stage automatic transmission 12 and holding the gear stages. That is, the gear-shift control determination data is data including a lean angular velocity threshold that is a threshold of the lean angular velocity for determining whether or not changing of gear stages in the multi-stage automatic transmission 12 is permitted, and a leftward lean angle threshold and a rightward lean angle threshold that are thresholds of the lean angle for determining whether or not changing of gear stages in the multi-stage automatic transmission 12 is permitted. The leftward lean angle threshold is a threshold of a lean angle in the case where the vehicle 1 leans leftward. The rightward lean angle threshold is a threshold of a lean angle in the case where the vehicle 1 leans rightward. The leftward lean angle threshold is a lean angle at which in a case where the lean angle of the vehicle 1 in the leftward lean state changes toward the lean angle of zero degrees, when the vehicle 1 passes at a lean angular velocity larger than the lean angular velocity threshold, the lean angle of the vehicle 1 is highly likely to change across the lean angle of zero degrees (i.e., the vehicle 1 is highly likely to switch to the rightward lean state). The rightward lean angle threshold is a lean angle at which if the lean angle of the vehicle 1 in the rightward lean state changes toward the lean angle of zero degrees, when the vehicle 1 passes at a lean angular velocity larger than the lean angular velocity threshold, the lean angle of the vehicle 1 is highly likely to change across the lean angle of zero degrees (i.e., the vehicle 1 is highly likely to switch to the leftward lean state).

If the lean angle obtained from the lean angular velocity while the vehicle 1 leans leftward is included in the range from the leftward lean angle threshold to the lean angle of zero degrees, the lean angle of the vehicle 1 changes toward the lean angle of zero degrees, and the lean angular velocity exceeds the lean angular velocity threshold, the gear-shift control determiner 72 predicts that the vehicle 1 changes from the leftward lean state to the rightward lean state through the state where the lean angle is zero degrees. If the lean angle while the vehicle 1 leans rightward is included in the range from the rightward lean angle threshold to the lean angle of zero degrees, the lean angle of the vehicle 1 changes toward the lean angle of zero degrees, and the lean angular velocity exceeds the lean angular velocity threshold, the gear-shift control determiner 72 predicts that the vehicle 1 changes from the rightward lean state to the leftward lean state through the state where the lean angle is zero degrees. The gear-shift control determiner 72 changes an output of the engine 11 in accordance with an operation amount of the throttle grip 9 while holding gear stages in the multi-stage automatic transmission 12.

If the lean angle obtained from the lean angular velocity detected by the lean detector 61 is not included in the range from the leftward lean angle threshold to the lean angle of zero degrees or the range from the rightward lean angle threshold to the lean angle of zero degrees, if the lean angle of the vehicle 1 does not change toward the lean angle of zero degrees, or if the lean angular velocity detected by the lean detector 61 is less than or equal to the lean angular velocity threshold, the gear-shift control determiner 72 permits changing of the gear stages.

The gear-shift control determiner 72 outputs a result of determination on whether to change gear stages in the multi-stage automatic transmission 12, as a gear-shift control determination signal.

If the gear-shift control determination signal output from the gear-shift control determiner 72 is a signal for permitting changing of the gear stages in the multi-stage automatic transmission 12, the gear-shift signal generator 73 generates a gear-shift signal in accordance with the vehicle speed, the engine speed, and the throttle opening degree of the vehicle 1. The gear-shift signal generated by the gear-shift signal generator 73 is output to the multi-stage automatic transmission 12. In the multi-stage automatic transmission 12, driving of the clutch actuator 15 and the shift actuator 16 is controlled based on the gear-shift signal.

If the gear-shift control determination signal output from the gear-shift control determiner 72 is a signal for holding gear stages in the multi-stage automatic transmission 12, the gear-shift signal generator 73 does not generate a gear-shift signal.

The operation amount acquirer 75 acquires an operation amount output from the throttle grip 9 when the driver operates the throttle grip 9.

The driving signal generator 76 generates a driving signal for driving the engine 11 by using the operation amount acquired by the operation amount acquirer 75. The driving signal generated by the driving signal generator 76 is output to the engine 11. In the engine 11, driving of a throttle valve, not shown, is controlled based on the driving signal.

The driving signal generator 76 generates a driving signal for changing a throttle opening degree of the throttle valve of the engine 11 in accordance with the operation amount of the throttle grip 9 by the driver. The driving signal generator 76 generates a driving signal for increasing a throttle opening degree as the operation amount of the throttle grip 9 increases, for example. The driving signal generator 76 generates the driving signal irrespective of the lean angular velocity of the vehicle 1.

The steering data acquirer 77 acquires data on a physical quantity concerning steering of the steering device 8 detected by the steering detector 62. Although not specifically described, the data acquired by the steering data acquirer 77 is used for, for example, steering assist control for assisting an operation of the steering device 8. In this embodiment, the data acquired by the steering data acquirer 77 is not used for gear-shift control of the multi-stage automatic transmission 12.

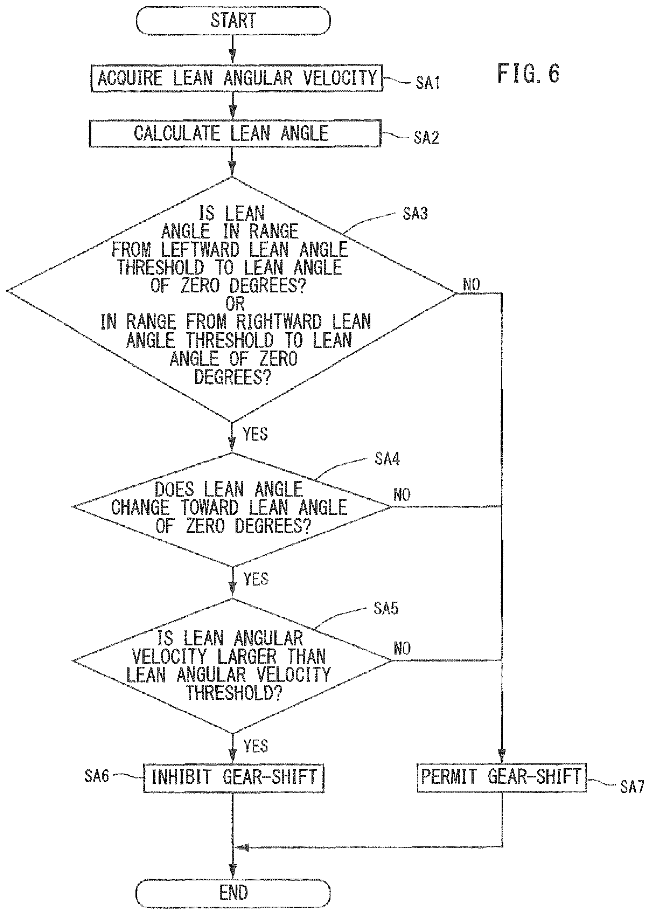

Next, gear-shift control by the controller 7 having the configuration as above will be described. FIG. 6 depicts an operation flow of gear-shift control by the controller 7.

When the flow depicted in FIG. 6 starts, the lean angular velocity acquirer 71 of the controller 7 first acquires data on the lean angular velocity of the vehicle 1 detected by the lean detector 61 (step SA1).

Thereafter, the lean angle calculator 171 of the controller 7 calculates a lean angle from the lean angular velocity acquired by the lean angular velocity acquirer 71 (step SA2).

The gear-shift control determiner 72 of the controller 7 determines whether to change gear stages in the multi-stage automatic transmission 12 from the gear-shift control determination data stored in the memory 74 by using the lean angular velocity and the lean angle (step SA3, step SA4, and step SA5).

The gear-shift control determination data is data for determining whether to permit changing of gear stages in the multi-stage automatic transmission 12 and to hold the gear stages. Specifically, the gear-shift control determination data is data including the lean angular velocity threshold for determining whether to permit changing of gear stages in the multi-stage automatic transmission 12 and to hold gear stages in accordance with the lean angular velocity.

The gear-shift control determiner 72 of the controller 7 determines whether or not the vehicle 1 is in the vehicle state where it is predicted that the vehicle 1 changes from the leftward lean state to the rightward lean state through the state where the lean angle is zero degrees or the vehicle state where it is predicted that the vehicle 1 changes from the rightward lean state to the leftward lean state through the state where the lean angle is zero degrees.

The gear-shift control determiner 72 determines whether or not the lean angle obtained from the lean angular velocity while the vehicle 1 leans leftward is included in the range from the leftward lean angle threshold to the lean angle of zero degrees, or whether or not the lean angle obtained from the lean angular velocity while the vehicle 1 leans rightward is included in the range from the rightward lean angle threshold to the lean angle of zero degrees. If the gear-shift control determiner 72 determines that the lean angle of the vehicle 1 is included in the range from the leftward lean angle threshold to the lean angle of zero degrees or the range from the rightward lean angle threshold to the lean angle of zero degrees (YES in step SA3), the process proceeds to step SA4.

If the lean angle obtained from the lean angular velocity while the vehicle 1 leans leftward is not included in the range from the leftward lean angle threshold to the lean angle of zero degrees and the lean angle obtained from the lean angular velocity while the vehicle 1 leans rightward is not included in the range from the rightward lean angle threshold to the lean angle of zero degrees (NO in step SA3), the gear-shift control determiner 72 proceeds to step SA7, and then generates a gear-shift control determination signal for permitting gear-shift of the multi-stage automatic transmission 12, and outputs the generated gear-shift control determination signal to the gear-shift signal generator 73. The gear-shift signal generator 73 generates a gear-shift signal in accordance with the vehicle speed, the engine speed, and the throttle opening degree of the vehicle 1, and outputs the generated gear-shift signal to the multi-stage automatic transmission 12.

The gear-shift control determiner 72 determines whether or not the lean angle of the vehicle 1 changes toward the lean angle of zero degrees. If the gear-shift control determiner 72 determines that the lean angle of the vehicle 1 changes toward the lean angle of zero degrees (YES in step SA4), the gear-shift control determiner 72 proceeds to step SA5.

If the gear-shift control determiner 72 determines that the lean angle of the vehicle 1 does not change toward the lean angle of zero degrees (NO in step SA4), the gear-shift control determiner 72 proceeds to step SA7, and then generates a gear-shift control determination signal for permitting a gear-shift of the multi-stage automatic transmission 12, and outputs the generated gear-shift control determination signal to the gear-shift signal generator 73. The gear-shift signal generator 73 generates a gear-shift signal in accordance with the vehicle speed, the engine speed, and the throttle opening degree of the vehicle 1, and outputs the generated gear-shift signal to the multi-stage automatic transmission 12.

The gear-shift control determiner 72 determines whether or not the lean angular velocity detected by the lean detector 61 exceeds the lean angular velocity threshold. If the gear-shift control determiner 72 determines that the lean angular velocity detected by the lean detector 61 exceeds the lean angular velocity threshold (YES in step SA5), the gear-shift control determiner 72 proceeds to step SA6, and then generates a gear-shift control determination signal for holding gear stages in the multi-stage automatic transmission 12, and outputs the generated gear-shift control determination signal to the gear-shift signal generator 73. The gear-shift signal generator 73 does not generate a gear-shift signal.

If the lean angular velocity is less than or equal to the lean angular velocity threshold (NO in step SA5), the gear-shift control determiner 72 proceeds to step SA7, and then generates a gear-shift control determination signal for permitting a gear-shift of the multi-stage automatic transmission 12, and outputs the generated gear-shift control determination signal to the gear-shift signal generator 73. The gear-shift signal generator 73 generates a gear-shift signal in accordance with the vehicle speed, the engine speed, and the throttle opening degree of the vehicle 1, and outputs the generated gear-shift signal to the multi-stage automatic transmission 12.

After the processes in steps SA4 and SA5, this flow is finished.

As described above, if the lean angle obtained from the lean angular velocity while the vehicle 1 leans leftward is included in the range from the leftward lean angle threshold to the lean angle of zero degrees, the lean angle of the vehicle 1 changes toward the lean angle of zero degrees, and the lean angular velocity exceeds the lean angular velocity threshold or if the lean angle while vehicle 1 leans rightward is included in the range from the rightward lean angle threshold to the lean angle of zero degrees, the lean angle of the vehicle 1 changes toward the lean angle of zero degrees, and the lean angular velocity exceeds the lean angular velocity threshold, the controller 7 changes an output of the engine 11 in accordance with the operation amount of the throttle grip 9 while holding gear stages in the multi-stage automatic transmission 12.

Accordingly, when the lean angular velocity of the vehicle 1 exceeds the lean angular velocity threshold, a posture change occurring in the vehicle 1 by changing gear stages in the multi-stage automatic transmission 12 can be reduced.

In addition, even in the case where the gear stages in the multi-stage automatic transmission 12 are held as described above, a posture of the vehicle 1 during turning can be controlled in accordance with the operation amount of the throttle grip 9 by controlling an output of the engine 11 in accordance with the operation amount of the throttle grip 9.

Thus, if the lean angular velocity of the vehicle 1 exceeds the lean angular velocity threshold, a posture change occurring in the vehicle 1 by changing gear stages in the multi-stage automatic transmission 12 can be reduced, and the posture of the vehicle 1 during turning can be controlled in accordance with the operation amount of the throttle grip 9.

If the lean angular velocity of the vehicle 1 exceeds the lean angular velocity threshold, the controller 7 holds the gear stages in the multi-stage automatic transmission 12, irrespective of the physical quantity concerning steering in the steering device 8. As a result, a posture change occurring in the vehicle 1 can be more reliably reduced by holding the gear stages in the multi-stage automatic transmission 12.

### (Second Embodiment)

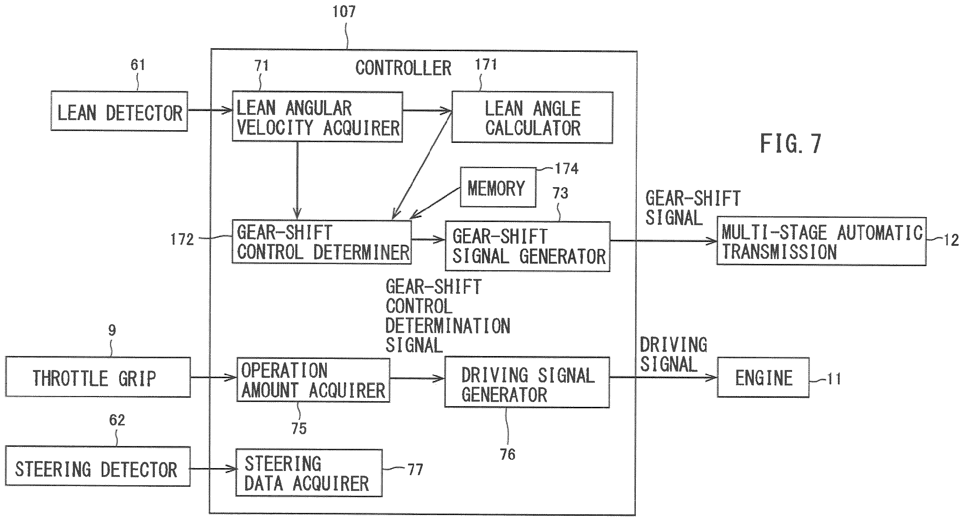

FIG. 7 illustrates a schematic configuration of a controller 107 of a vehicle according to a second embodiment. The controller 107 of this embodiment is different from the configuration of the first embodiment in that if the lean angular velocity detected by the lean detector 61 is maintained for a predetermined time in a state less than or equal to the lean angular velocity threshold with the plurality of gear stages in the multi-stage automatic transmission 12 being held, the controller 107 permits changing of the plurality of gear stages in the multi-stage automatic transmission 12. In the following description, components similar to those of the first embodiment are denoted by the same reference characters and will not be described again, and only components different from those of the first embodiment will be described.

The controller 107 includes a lean angular velocity acquirer 71, a lean angle calculator 171, a gear-shift control determiner 172, a gear-shift signal generator 73, a memory 174, an operation amount acquirer 75, a driving signal generator 76, and a steering data acquirer 77. The lean angular velocity acquirer 71, the gear-shift signal generator 73, the operation amount acquirer 75, the driving signal generator 76, and the steering data acquirer 77 have configurations similar to those in the first embodiment, and thus, will not be described in detail.

The lean angle calculator 171 calculates a lean angle from a lean angular velocity of the vehicle 1 acquired by the lean angular velocity acquirer 71. The lean angle calculator 171 calculates the lean angle by, for example, integrating the lean angular velocity over a predetermined period.

The gear-shift control determiner 172 determines whether or not to change gear stages in the multi-stage automatic transmission 12 from gear-shift control determination data previously stored in the memory 174, by using the lean angular velocity acquired by the lean angular velocity acquirer 71 and the lean angular velocity calculated by the lean angle calculator 171.

In this embodiment, the gear-shift determination data is data including a lean angular velocity threshold as a threshold of a lean angular velocity and a lean angle threshold as a threshold of a lean angle, and the lean angular velocity threshold and the lean angle threshold are used for determining whether to change gear stages in the multi-stage automatic transmission 12. If the lean angle obtained from the lean angular velocity while the vehicle 1 leans leftward is included in a range from the leftward lean angle threshold to the lean angle of zero degrees, the lean angle of the vehicle 1 changes toward the lean angle of zero degrees, and the lean angular velocity exceeds the lean angular velocity threshold, or if the lean angle while the vehicle 1 leans rightward is included in a range from the rightward lean angle threshold to the lean angle of zero degrees, the lean angle of the vehicle 1 changes toward the lean angle of zero degrees, and the lean angular velocity exceeds the lean angular velocity threshold, the gear-shift control determiner 172 holds gear stages in the multi-stage automatic transmission 12.

If the lean angle obtained from the lean angular velocity while the vehicle 1 leans leftward is not included in the range from the leftward lean angle threshold to the lean angle of zero degrees and the lean angle while the vehicle 1 leans rightward is not included in the range from the rightward lean angle threshold to the lean angle of zero degrees, if the lean angle of the vehicle 1 does not change toward the lean angle of zero degrees, or if the lean angular velocity detected by the lean detector 61 is less than or equal to the lean angular velocity threshold, or if the lean angular velocity detected by the lean detector 61 is maintained for a predetermined time in a state less than or equal to the lean angular velocity threshold with the plurality of gear stages in the multi-stage automatic transmission 12 being held, the gear-shift control determiner 172 permits changing of the gear stages in the multi-stage automatic transmission 12.

The gear-shift control determiner 172 outputs a result of determination on whether to change gear stages in the multi-stage automatic transmission 12, as a gear-shift control determination signal.

If the gear-shift control determination signal is a signal for permitting changing of the gear stages in the multi-stage automatic transmission 12, the gear-shift signal generator 73 generates a gear-shift signal in accordance with a vehicle speed, an engine speed, and a throttle opening degree of the vehicle 1, in a manner similar to the first embodiment. This gear-shift signal is output to the multi-stage automatic transmission 12. If the gear-shift control determination signal is a signal for holding the gear stages in the multi-stage automatic transmission 12, the gear-shift signal generator 73 does not generate a gear-shift signal, in a manner similar to the first embodiment.

In a manner similar to the first embodiment, even if the lean angle obtained from the lean angular velocity while the vehicle 1 leans leftward is included in the range from the leftward lean angle threshold to the lean angle of zero degrees, the lean angle of the vehicle 1 changes toward the lean angle of zero degrees, and the lean angular velocity exceeds the lean angular velocity threshold, or if the lean angle obtained from the lean angular velocity while the vehicle 1 leans rightward is included in the range from the rightward lean angle threshold to the lean angle of zero degrees, the lean angle of the vehicle 1 changes toward the lean angle of zero degrees, and the lean angular velocity exceeds the lean angular velocity threshold, the controller 107 controls an output of the engine 11 in accordance with an operation amount of the throttle grip 9. If the lean angular velocity of the vehicle 1 exceeds the lean angular velocity threshold and the lean angle of the vehicle 1 exceeds the lean angle threshold, the controller 107 holds the gear stages in the multi-stage automatic transmission 12, irrespective of a physical quantity concerning steering in the steering device 8 detected by the steering detector 62.

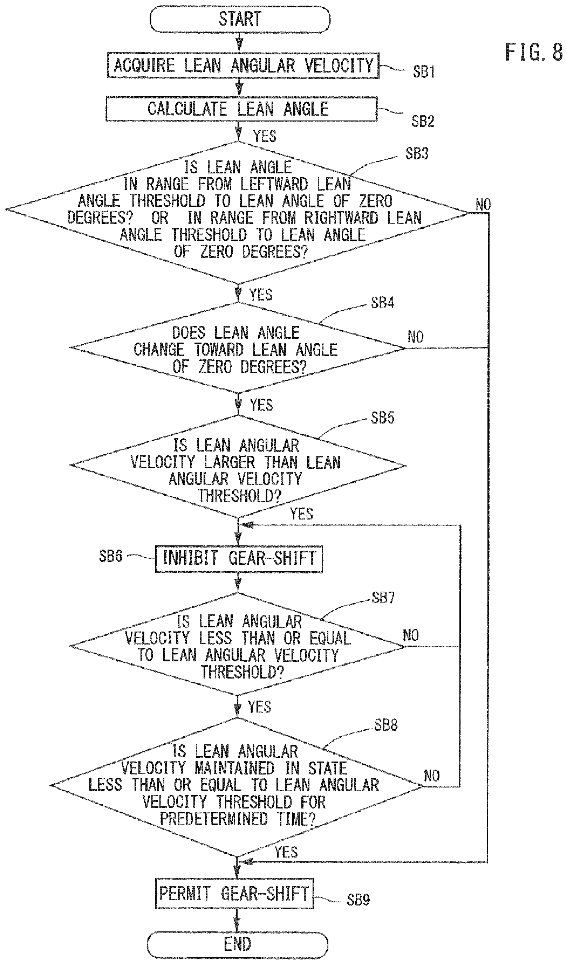

Next, gear-shift control by the controller 107 having the configuration as described above will be described. FIG. 8 shows an operation flow of gear-shift control by the controller 107.

When the flow depicted in FIG. 8 starts, the lean angular velocity acquirer 71 of the controller 7 first acquires data on the lean angular velocity of the vehicle 1 detected by the lean detector 61 (step SB1).

Thereafter, the lean angle calculator 171 of the controller 107 calculates a lean angle from the lean angular velocity acquired by the lean angular velocity acquirer 71 (step SB2).

The gear-shift control determiner 72 of the controller 107 determines whether to change gear stages in the multi-stage automatic transmission 12 from the gear-shift control determination data stored in the memory 174 by using the lean angular velocity and the lean angle (steps SB3, SB4, and SB5).

The gear-shift control determination data is data for determining whether to permit or inhibit changing gear stages in the multi-stage automatic transmission 12. Specifically, the gear-shift control determination data is data including the lean angular velocity threshold and the lean angle threshold that are used for determining permission and inhibition of changing of gear stages in the multi-stage automatic transmission 12 in accordance with the lean angular velocity.

The gear-shift control determiner 72 of the controller 107 determines whether or not the vehicle 1 is in the vehicle state where it is predicted that the vehicle 1 changes from the leftward lean state to the rightward lean state through the state where the lean angle is zero degrees or the vehicle state where it is predicted that the vehicle 1 changes from the rightward lean state to the leftward lean state through the state where the lean angle is zero degrees.

The gear-shift control determiner 72 determines whether or not the lean angle obtained from the lean angular velocity while the vehicle 1 leans leftward is included in the range from the leftward lean angle threshold to the lean angle of zero degrees or whether or not the lean angle obtained from the lean angular velocity while the vehicle 1 leans rightward is included in the range from the rightward lean angle threshold to the lean angle of zero degrees. If the gear-shift control determiner 72 determines that the lean angle of the vehicle 1 is included in the range from the leftward lean angle threshold to the lean angle of zero degrees or the range from the rightward lean angle threshold to the lean angle of zero degrees (YES in step SB3), the process proceeds to step SB4.

If the lean angle obtained from the lean angular velocity detected by the lean detector 61 is not included in the lean angle range (NO in step SB3), the gear-shift control determiner 72 proceeds to step SB9.

The gear-shift control determiner 72 determines whether or not the lean angle of the vehicle 1 changes toward the lean angle of zero degrees. If the gear-shift control determiner 72 determines that the lean angle of the vehicle 1 changes toward the lean angle of zero degrees (YES in step SB4), the gear-shift control determiner 72 proceeds to step SB5.

If the gear-shift control determiner 72 determines that the lean angle of the vehicle 1 does not change toward the lean angle of zero degrees (NO in step SB4), the gear-shift control determiner 72 proceeds to step SB9.

The gear-shift control determiner 72 determines whether or not the lean angular velocity detected by the lean detector 61 exceeds the lean angular velocity threshold. If the gear-shift control determiner 72 determines that the lean angular velocity detected by the lean detector 61 exceeds the lean angular velocity threshold (YES in step SB5), the process proceeds to step SB6.

If the lean angular velocity is less than or equal to the lean angular velocity threshold (NO in step SB5), the gear-shift control determiner 72 proceeds to step SB9.

The gear-shift control determiner 72 generates a gear-shift control determination signal for holding gear stages in the multi-stage automatic transmission 12, outputs the generated gear-shift control determination signal to the gear-shift signal generator 73, and proceeds to step SB7. The gear-shift signal generator 73 does not generate a gear-shift signal (step SB6).

The gear-shift control determiner 72 determines whether or not the lean angular velocity detected by the lean detector 61 is less than or equal to the lean angular velocity threshold. If the gear-shift control determiner 72 determines that the lean angular velocity detected by the lean detector 61 is less than or equal to the lean angular velocity threshold (YES in step SB7), the process proceeds to step SB8.

If the lean angular velocity is not less than or equal to the lean angular velocity threshold (NO in step SB7), the gear-shift control determiner 72 proceeds to step SB6, and then generates a gear-shift control determination signal for holding the gear stages in the multi-stage automatic transmission 12, outputs the generated gear-shift control determination signal to the gear-shift signal generator 73, and proceeds to step SB7.

The gear-shift control determiner 72 determines whether or not the lean angular velocity detected by the lean detector 61 is maintained for a predetermined time in a state less than or equal to the lean angular velocity threshold. If the gear-shift control determiner 72 determines that the lean angular velocity detected by the lean detector 61 is maintained for the predetermined time in the state less than or equal to the lean angular velocity threshold (YES in step SB8), the process proceeds to step SB9.

If the gear-shift control determiner 72 determines that the lean angular velocity is not maintained for the predetermined time in the state less than or equal to the lean angular velocity threshold (NO in step SB8), the process proceeds to step SB6, and then generates a gear-shift control determination signal for holding gear stages in the multi-stage automatic transmission 12, outputs the generated gear-shift control determination signal to the gear-shift signal generator 73, and proceeds to step SB7.

The gear-shift control determiner 72 generates a gear-shift control determination signal for permitting a gear-shift of the multi-stage automatic transmission 12, and outputs the generated gear-shift control determination signal to the gear-shift signal generator 73. The gear-shift signal generator 73 generates a gear-shift signal in accordance with a vehicle speed, an engine speed, and a throttle opening degree of the vehicle 1, outputs the generated gear-shift signal to the multi-stage automatic transmission 12, and then terminates this flow (step SB9).

As described above, if the lean angle obtained from the lean angular velocity while the vehicle 1 leans leftward is included in the range from the leftward lean angle threshold to the lean angle of zero degrees, the lean angle of the vehicle 1 changes toward the lean angle of zero degrees, and the lean angular velocity exceeds the lean angular velocity threshold, the controller 107 predicts that the vehicle 1 changes from the leftward lean state to the rightward lean state through the state where the lean angle is zero degrees. If the lean angle while the vehicle 1 leans rightward is included in the range from the rightward lean angle threshold to the lean angle of zero degrees, the lean angle of the vehicle 1 changes toward the lean angle of zero degrees, and the lean angular velocity exceeds the lean angular velocity threshold, the controller 107 predicts that the vehicle 1 changes from the rightward lean state to the leftward lean state through the state where the lean angle is zero degrees. The controller 107 controls an output of the engine 11 in accordance with the operation amount of the throttle grip 9 while holding the gear stages in the multi-stage automatic transmission 12.

Accordingly, if the vehicle 1 is in the vehicle state where it is predicted that the vehicle 1 changes from the leftward lean state to the rightward lean state through the state where the lean angle is zero degrees or the vehicle state in which it is predicted that the vehicle 1 changes from the rightward lean state to the leftward lean state through the state where the lean angle is zero degrees, a posture change occurring in the vehicle 1 by changing gear stages in the multi-stage automatic transmission 12 can be reduced.

In addition, even in the case where the gear stages in the multi-stage automatic transmission 12 are held as described above, a posture of the vehicle 1 during turning can be controlled in accordance with the operation amount of the throttle grip 9 by controlling an output of the engine 11 in accordance with the operation amount of the throttle grip 9.

Thus, if the lean angle obtained from the lean angular velocity while the vehicle 1 leans leftward is included in the range from the leftward lean angle threshold to the lean angle of zero degrees, the lean angle of the vehicle 1 changes toward the lean angle of zero degrees, and the lean angular velocity exceeds the lean angular velocity threshold, or if the lean angle while the vehicle 1 leans rightward is included in the range from the rightward lean angle threshold to the lean angle of zero degrees, the lean angle of the vehicle 1 changes toward the lean angle of zero degrees, and the lean angular velocity exceeds the lean angular velocity threshold, a posture change occurring in the vehicle 1 by changing gear stages in the multi-stage automatic transmission 12 can be reduced, and a posture of the vehicle 1 during turning can be controlled in accordance with the operation amount of the throttle grip 9.

If the lean angular velocity detected by the lean detector 61 is maintained for the predetermined time in the state less than or equal to the lean angular velocity threshold with the plurality of gear stages in the multi-stage automatic transmission 12 being held, the controller 107 permits changing of the plurality of gear stages in the multi-stage automatic transmission 12.

If the lean angular velocity is maintained for the predetermined time in the state less than or equal to the lean angular velocity threshold, the controller 107 determines that the vehicle 1 does not change from the leftward lean state to the rightward lean state through the state where the lean angle is zero degrees or that the vehicle 1 does not change from the rightward lean state to the leftward lean state through the state where the lean angle is zero degrees. That is, if the lean angular velocity is maintained for the predetermined time in the state less than or equal to the lean angular velocity threshold with the plurality of gear stages being held, the controller 107 determines that a lean operation on the leaning vehicle is completed at the time when the vehicle 1 changes from a lean state to the state where the lean angle is zero degrees.

The controller 107 assumes that the influence of a posture change occurring in the vehicle 1 by changing the plurality of gear stages is small, and permits changing of the plurality of gear stages in the multi-stage automatic transmission 12. Accordingly, if the controller 107 determines that the vehicle body of the leaning vehicle does not turn in a lean state where posture control during turning is difficult, the controller 107 permits changing of the plurality of gear stages in the multi-stage automatic transmission 12 so that convenience of the driver can thereby be maintained.

### (Third Embodiment)

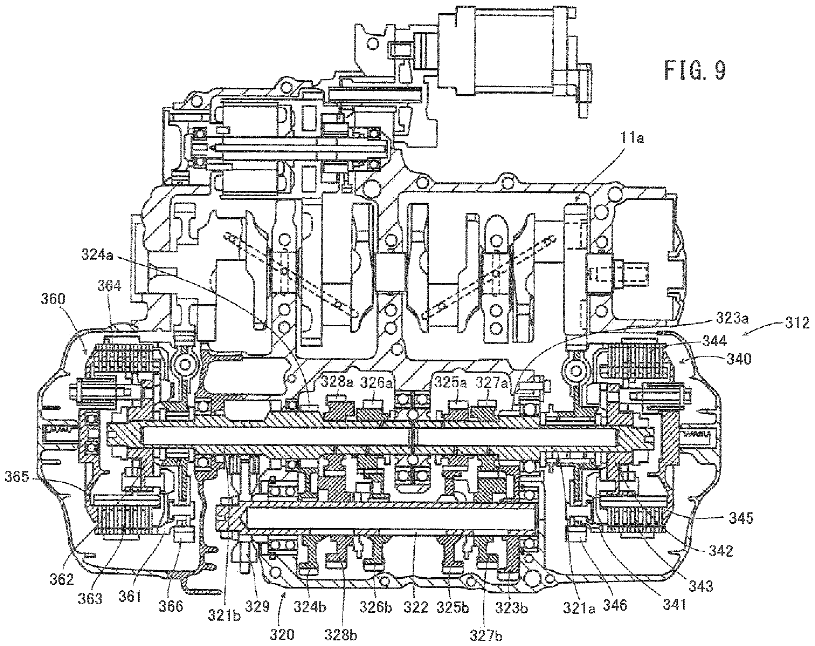

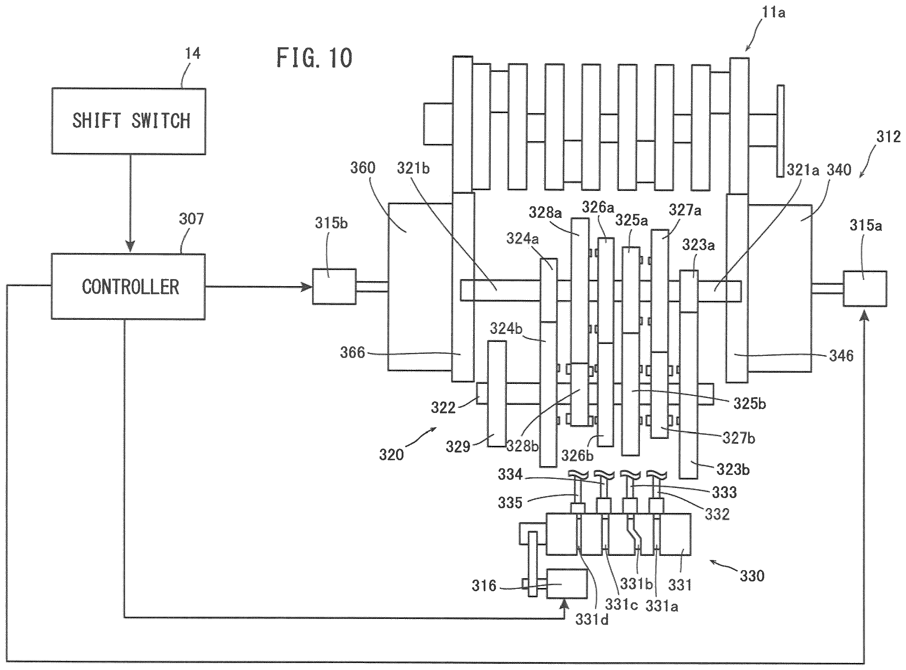

FIG. 9 illustrates a schematic configuration of a multi-stage automatic transmission 312 of a vehicle according to a third embodiment. FIG. 10 schematically illustrates the configuration of the multi-stage automatic transmission 312 for description. The multi-stage automatic transmission 312 of this embodiment is different from the configuration of the first embodiment in including two clutches of a first clutch 340 and a second clutch 360. In the following description, components similar to those of the first embodiment are denoted by the same reference characters and will not be described again, and only components different from those of the first embodiment will be described.

The multi-stage automatic transmission 312 includes a plurality of friction driving clutches, and achieves smooth gear-shift by alternately performing power transfer in odd-number stages and in even-number stages out of the gear stages with the first clutch 340 and the second clutch 360. The multi-stage automatic transmission 312 includes a transmission mechanism 320, the first clutch 340, the second clutch 360, and a shift mechanism.

The transmission mechanism 320 is connected to a crankshaft 11a of an engine 11. The transmission mechanism 320 changes a torque transferred from the crankshaft 11a to a predetermined torque, and outputs the predetermined torque.

The first clutch 340 and the second clutch 360 are configured to transfer rotation of the crankshaft 11a to the transmission mechanism 320. That is, the first clutch 340 and the second clutch 360 are configured to switch between transfer and non-transfer of rotation of the crankshaft 11a to the transmission mechanism 320.

The first clutch 340 is driven by a first clutch actuator 315a described later. The first clutch 340 transfers a driving force at odd-number stages (i.e., first-speed stage, third-speed stage, and fifth-speed stage) of the transmission mechanism 320.

The second clutch 360 is driven by a second clutch actuator 315b described later. The second clutch 360 transfers a driving force at even-number stages (i.e., second-speed stage, fourth-speed stage, and six-speed stage) of the transmission mechanism 320.

The shift mechanism performs a gear-shift of the transmission mechanism 320 through a sequential shift mechanism 330 described later, and retains a gear stage selected by the transmission mechanism 320 until next gear-shift is performed by the transmission mechanism 320. A configuration of the shift mechanism is similar to the configuration of the shift mechanism 50 of the first embodiment, and thus, will not be described in detail.

As described above, a driving force is transferred to the transmission mechanism 320 of the multi-stage automatic transmission 312 from the engine 11 through the first clutch 340 or the second clutch 360.

A configuration of the multi-stage automatic transmission 312 including the transmission mechanism 320, the first clutch 340, the second clutch 360, and the shift mechanism will now be described in detail.

Each of the first clutch 340 and the second clutch 360 is, for example, a multiplate friction clutch. The first clutch 340 includes a bottomed cylindrical clutch housing 341, a bottomed cylindrical clutch boss 342, a plurality of friction plates 343 and clutch plates 344 that are friction discs, a pressure plate 345, and an input gear 346. The second clutch 360 includes a bottomed cylindrical clutch housing 361, a bottomed cylindrical clutch boss 362, a plurality of friction plates 363 and clutch plates 364 that are friction discs, a pressure plate 365, and an input gear 366.

The first clutch 340 and the second clutch 360 have the same configuration. The configuration of the first clutch 340 and the second clutch 360 is similar to the configuration of the clutch 40 in the first embodiment. Thus, the configurations of the first clutch 340 and the second clutch 360 will not be described in detail.

The clutch boss 342 of the first clutch 340 is coupled to an end portion of a first main shaft 321a described later in the transmission mechanism 320. The clutch housing 341 of the first clutch 340 is connected to the input gear 346 that meshes with a gear provided on the crankshaft 11a. The plurality of friction plates 343 are attached to the inner peripheral surface of the clutch housing 341. The plurality of clutch plates 344 are attached on the outer peripheral surface of the clutch boss 342. The friction plates 343 and the clutch plates 344 are engaged or disengaged to thereby enable the first clutch 340 to switch between transfer and non-transfer of rotation of the crankshaft 11a to the first main shaft 321a of the transmission mechanism 320.

The clutch boss 362 of the second clutch 360 is coupled to an end portion of a second main shaft 321b described later in the transmission mechanism 320. A clutch housing 361 of the second clutch 360 is connected to the input gear 366 that meshes with a gear provided on the crankshaft 11a. The plurality of friction plates 363 are attached to the inner peripheral surface of the clutch housing 361. The plurality of clutch plates 364 are attached on the outer peripheral surface of the clutch boss 362. The friction plates 363 and the clutch plates 364 are engaged or disengaged to thereby enable the second clutch 360 to switch between transfer and non-transfer of rotation of the crankshaft 11a to the second main shaft 321b of the transmission mechanism 320.

Engagement and disengagement between the friction plates 343 and the clutch plates 344 in the first clutch 340 are performed by driving the first clutch actuator 315a as illustrated in FIG. 10. Engagement and disengagement between the friction plates 363 and the clutch plates 364 in the second clutch 360 are performed by driving the second clutch actuator 315b as illustrated in FIG. 10.

The transmission mechanism 320 is a multistep transmission mechanism. The transmission mechanism 320 includes the first main shaft 321a, the second main shaft 321b, the output shaft 322, a plurality of driving gears, a plurality of driven gears, and the sequential shift mechanism 330 (see FIG. 10).

The first main shaft 321a and the second main shaft 321b are disposed on the same axis such that one end of the first main shaft 321a faces one end of the second main shaft 321b. The first main shaft 321a and the second main shaft 321b are rotatable independently of each other. The other end of the first main shaft 321a is coupled to the clutch boss 342 of the first clutch 340. The other end of the second main shaft 321b is coupled to the clutch boss 362 of the second clutch 360.

The first main shaft 321a is provided with, as part of the plurality of driving gears, a first-speed fixing gear 323a, a first spline gear 325a, and a fifth-speed gear 327a constituting each of odd-number stages including a first-speed gear, a third-speed gear, and a fifth-speed gear. The first-speed fixing gear 323a, the first spline gear 325a, and the fifth-speed gear 327a are arranged on the first main shaft 321a in the order of the first-speed fixing gear 323a, the fifth-speed gear 327a, and the first spline gear 325a from an end portion to which the first clutch 340 is connected.

The first-speed fixing gear 323a is fixed to the first main shaft 321a, and rotates together with the first main shaft 321a. The first-speed fixing gear 323a meshes with a first-speed gear 323b described later disposed on the output shaft 322.

The fifth-speed gear 327a is rotatably attached on the first main shaft 321a with movement in the axial direction of the first main shaft 321a restricted. The fifth-speed gear 327a meshes with a third spline gear 327b described later of the output shaft 322.

The first spline gear 325a is attached on the first main shaft 321a to be rotatable together with the first main shaft 321a and movable along the axial direction of the first main shaft 321a. The first spline gear 325a meshes with a third-speed gear 325b of the output shaft 322.

The first spline gear 325a is connected to a shift fork 333 described later of the sequential shift mechanism 330, and moves in the axial direction on the first main shaft 321a by movement of the shift fork 333. The first spline gear 325a moves on the first main shaft 321a as described above to thereby be connected to the fifth-speed gear 327a. Accordingly, the fifth-speed gear 327a can rotate together with the first main shaft 321a.

The second main shaft 321b is provided with, as part of the plurality of driving gears, a second-speed fixing gear 324a, a second spline gear 326a, and a sixth-speed gear 328a constituting each of even-number stages including a second-speed gear, a fourth-speed gear, and a sixth-speed gear. The second-speed fixing gear 324a, the second spline gear 326a, and the sixth-speed gear 328a are arranged on the second main shaft 321b in the order of the second-speed fixing gear 324a, the sixth-speed gear 328a, and the second spline gear 326a from an end portion to which the second clutch 360 is connected.

The second-speed fixing gear 324a is fixed to the second main shaft 321b, and rotates together with the second main shaft 321b. The second-speed fixing gear 324a meshes with a second-speed gear 324b described later disposed on the output shaft 322.

The sixth-speed gear 328a is rotatably attached on the second main shaft 321b with movement in the axial direction of the second main shaft 321b restricted. The sixth-speed gear 328a meshes with a fourth spline gear 328b described later of the output shaft 322.

The second spline gear 326a is attached on the second main shaft 321b to be rotatable together with the second main shaft 321b and movable along the axial direction of the second main shaft 321b. The second spline gear 326a meshes with a fourth-speed gear 326b of the output shaft 322.

The second spline gear 326a is connected to a shift fork 334 described later of the sequential shift mechanism 330, and moves in the axial direction on the second main shaft 321b by movement of the shift fork 334. The second spline gear 326a moves on the second main shaft 321b as described above to thereby be connected to the sixth-speed gear 328a. Accordingly, the sixth-speed gear 328a can rotate together with the second main shaft 321b.

The output shaft 322 is provided with the first-speed gear 323b, the third spline gear 327b, the third-speed gear 325b, the fourth-speed gear 326b, the fourth spline gear 328b, the second-speed gear 324b, and a sprocket 329 in this order from a side close to the first clutch 340. The first-speed gear 323b, the third-speed gear 325b, the fourth-speed gear 326b, and the second-speed gear 324b are provided on the output shaft 322 to be rotatable with respect to the output shaft 322 with movement along the axial direction of the output shaft 322 restricted.

The third spline gear 327b and the fourth spline gear 328b are attached on the output shaft 322 to rotate together with the output shaft 322 and to be movable along the axial direction of the output shaft 322. The third spline gear 327b meshes with the fifth-speed gear 327a of the first main shaft 321a. The fourth spline gear 328b meshes with the sixth-speed gear 328a of the second main shaft 321b.

The third spline gear 327b is connected to a shift fork 332 described later of the sequential shift mechanism 330, and is caused to move on the output shaft 322 along the axial direction by movement of the shift fork 332. With this movement on the output shaft 322, the third spline gear 327b is connected to the first-speed gear 323b or the third-speed gear 325b. Accordingly, the first-speed gear 323b or the third-speed gear 325b is allowed to rotate together with the output shaft 322.

The fourth spline gear 328b is connected to a shift fork 335 described later of the sequential shift mechanism 330, and is caused to move on the output shaft 322 along the axial direction by movement of the shift fork 335. With this movement on the output shaft 322, the fourth spline gear 328b is connected to the second-speed gear 324b or the fourth-speed gear 326b. Accordingly, the second-speed gear 324b or the fourth-speed gear 326b is allowed to rotate together with the output shaft 322.

The sprocket 329 rotates together with the output shaft 322. A chain, not shown, is attached to the sprocket 329. That is, rotation of the output shaft 322 is output through the sprocket 329 and the chain.

The first spline gear 325a, the second spline gear 326a, the third spline gear 327b, and the fourth spline gear 328b function as transmission gears, and also function as dog selectors. The first spline gear 325a, the second spline gear 326a, the third spline gear 327b, and the fourth spline gear 328b move along the axial direction on the first main shaft 321a, the second main shaft 321b, or the output shaft 322 to thereby be connected to the transmission gears adjacent to these gears in the axial direction by a dog mechanism, not shown. The dog mechanism is similar to a configuration of a known dog mechanism (e.g., Japanese Patent Application Publication No. 2010-133555), and thus, will not be described in detail.

For example, in a case where the gear stage of the transmission mechanism 320 is a first speed, the first spline gear 325a on the first main shaft 321a meshes with the third-speed gear 325b on the output shaft 322. The third spline gear 327b on the output shaft 322 is connected to the first-speed gear 323b. Accordingly, the first-speed gear 323b is fixed to the output shaft 322 through the third spline gear 327b to be rotatable together with the output shaft 322. Thus, rotation is transferred from the first main shaft 321a to the output shaft 322 through the first-speed gear 323b meshing with the first-speed fixing gear 323a fixed to the first main shaft 321a. At this time, the third-speed gear 325b meshing with the first spline gear 325a on the first main shaft 321a rotates with respect to the output shaft 322.

In a case where the gear stage of the transmission mechanism 320 is a second speed, the second spline gear 326a on the second main shaft 321b meshes with the fourth-speed gear 326b on the output shaft 322. The fourth spline gear 328b on the output shaft 322 is connected to the second-speed gear 324b. Accordingly, the second-speed gear 324b is fixed to the output shaft 322 through the fourth spline gear 328b to be rotatable together with the output shaft 322. Thus, rotation is transferred from the second main shaft 321b to the output shaft 322 through the second-speed gear 324b meshing with the second-speed fixing gear 324a fixed to the second main shaft 321b. At this time, the fourth-speed gear 326b meshing with the second spline gear 326a on the second main shaft 321b rotates with respect to the output shaft 322.

In a case where the gear stage of the transmission mechanism 320 is a third speed, the first spline gear 325a on the first main shaft 321a meshes with the third-speed gear 325b on the output shaft 322. The third spline gear 327b on the output shaft 322 is connected to the third-speed gear 325b. Accordingly, the third-speed gear 325b is fixed to the output shaft 322 through the third spline gear 327b to be rotatable together with the output shaft 322. Thus, rotation is transferred from the first main shaft 321a to the output shaft 322 through the third-speed gear 325b meshing with the first spline gear 325a that rotates together with the first main shaft 321a.

In a case where the gear stage of the transmission mechanism 320 is a fourth speed, the second spline gear 326a on the second main shaft 321b meshes with the fourth-speed gear 326b on the output shaft 322. The fourth spline gear 328b on the output shaft 322 is connected to the fourth-speed gear 326b. Accordingly, the fourth-speed gear 326b is fixed to the output shaft 322 through the fourth spline gear 328b to be rotatable together with the output shaft 322. Thus, rotation is transferred from the second main shaft 321b to the output shaft 322 through the fourth-speed gear 326b meshing with the second spline gear 326a that rotates together with the second main shaft 321b.

In a case where the gear stage of the transmission mechanism 320 is a fifth speed, the first spline gear 325a on the first main shaft 321a is connected to the fifth-speed gear 327a. Accordingly, the fifth-speed gear 327a is fixed to the first main shaft 321a through the first spline gear 325a to be rotatable together with the first main shaft 321a. The third spline gear 327b on the output shaft 322 meshes with the fifth-speed gear 327a on the first main shaft 321a at a position at which the third spline gear 327b is connected to none of the first-speed gear 323b and the third-speed gear 325b. Thus, rotation is transferred from the first main shaft 321a to the output shaft 322 through the fifth-speed gear 327a connected to the first spline gear 325a that rotates together with the first main shaft 321a and through the third spline gear 327b on the output shaft 322.

In a case where the gear stage of the transmission mechanism 320 is a sixth speed, the second spline gear 326a on the second main shaft 321b is connected to the sixth-speed gear 328a. Accordingly, the sixth-speed gear 328a is fixed to the second main shaft 321b through the second spline gear 326a to be rotatable together with the second main shaft 321b. The fourth spline gear 328b on the output shaft 322 meshes with the sixth-speed gear 328a on the second main shaft 321b at a position at which the fourth spline gear 328b is connected to none of the second-speed gear 324b and the fourth-speed gear 326b. Thus, rotation is transferred from the second main shaft 321b to the output shaft 322 through the sixth-speed gear 328a connected to the second spline gear 326a that rotates together with the second main shaft 321b and through the fourth spline gear 328b on the output shaft 322.

The sequential shift mechanism 330 includes a shift cam 331 and the shift forks 332 through 335. As illustrated in FIG. 10, cam grooves 331a through 331d are formed on the outer peripheral surface of the shift cam 331 of the sequential shift mechanism 330. The cam grooves 331a through 331d are arranged along the axial direction of the shift cam 331 and each extend circumferentially on the outer peripheral surface of the shift cam 331. Configurations of the cam grooves 331a through 331d of this embodiment are similar to those of known cam grooves (e.g., Japanese Patent Application Publication No. 2010-133555), and thus, will not be described in detail. Each of the cam grooves 331a through 331d is disposed on the outer peripheral surface of the shift cam 331 in the axial direction such that the position of the shift cam 331 changes in accordance with the position in the circumferential direction of the shift cam 331. One end of each of the shift forks 332 through 335 is located on an associated one of the cam grooves 331a through 331d.

The other end of the shift fork 332 is connected to the third spline gear 327b. The other end of the shift fork 333 is connected to the first spline gear 325a. The other end of the shift fork 334 is connected to the second spline gear 326a. The other end of the shift fork 335 is connected to the fourth spline gear 328b. Accordingly, when the shift forks 332 through 335 move in the axial direction along the cam grooves 331a through 331d of the shift cam 331, the first spline gear 325a, the second spline gear 326a, the third spline gear 327b, and the fourth spline gear 328b also move in the axial direction. A driving force in a rotation direction is applied to the shift cam 331 by a shift actuator 316.

As described above, with the movement of the first spline gear 325a, the second spline gear 326a, the third spline gear 327b, and the fourth spline gear 328b in accordance with the movement of the shift forks 332 through 335, changing to each gear stage is performed in the transmission mechanism 320 as described above.

In the multi-stage automatic transmission 312 having the configuration described above, in changing the gear stages in response to an operation of a shift switch 14 by a driver, the shift actuator 316, the first clutch actuator 315a, and the second clutch actuator 315b are controlled and driven by the controller 307. That is, the controller 307 outputs control signals to the shift actuator 316, the first clutch actuator 315a, and the second clutch actuator 315b.

The controller 307 disengages one of the first clutch 340 or the second clutch 360, and then, changes the gear stage on one of the first main shaft 321a or the second main shaft 321b connected to the disengaged clutch. Thereafter, the controller 307 causes the disengaged one of the first clutch 340 or the second clutch 360 to transition from the disengaged state to an engaged state through a semi-clutch state, while causing the engaged one of the first clutch 340 or the second clutch 360 to transition from the engaged state to the disengaged state through the semi-clutch state.

As one example of a gear-shift of the multi-stage automatic transmission 312, the case of shifting up the gear stage from a second speed to a third speed will be described. In this embodiment, the vehicle includes the shift switch 14 for allowing a driver to instruct changing of the gear stages to the multi-stage automatic transmission 312.

When the driver of the vehicle operates the shift switch 14 to perform a shift-up from the second speed to the third speed, the controller 307 controls driving of the first clutch actuator 315a so as to disengage the first clutch 340. Accordingly, torque transfer from the crankshaft 11a to the first main shaft 321a by way of the first clutch 340 is blocked. In this case, a torque of the crankshaft 11a is transferred to the output shaft 322 through the second clutch 360, the second main shaft 321b, the second-speed fixing gear 324a, the second-speed gear 324b, and the fourth spline gear 328b.

Next, the controller 307 controls driving of the shift actuator 316 to thereby cause the shift cam 331 to rotate by a predetermined angle. Accordingly, the shift fork 332 moves in the axial direction and connects the third spline gear 327b on the output shaft 322 to the third-speed gear 325b. Thus, the first main shaft 321a and the output shaft 322 are connected to each other to enable torque transfer through the first spline gear 325a, the third-speed gear 325b, and the third spline gear 327b. It should be noted that since the first clutch 340 is disengaged as described above, a torque of the crankshaft 11a is not transferred from the first main shaft 321a to the output shaft 322.

The controller 307 controls driving of the first clutch actuator 315a and the second clutch actuator 315b to thereby cause the first clutch 340 to transition from the disengaged state to the engaged state through the semi-clutch state, while causing the second clutch 360 to transition from the engaged state to the disengaged state through the semi-clutch state.

In this case, a torque transferred from the crankshaft 11a to the output shaft 322 through the first clutch 340, the first main shaft 321a, the first spline gear 325a, the third-speed gear 325b, and the third spline gear 327b gradually increases. A torque transferred from the crankshaft 11a to the output shaft 322 through the second clutch 360, the second main shaft 321b, the second-speed fixing gear 324a, the second-speed gear 324b, and the fourth spline gear 328b gradually decreases, and becomes zero when the second clutch 360 becomes disengaged.

As described above, in the multi-stage automatic transmission 312 of this embodiment, by changing the gear stages by using two clutches of the first clutch 340 and the second clutch 360, it is possible to prevent a torque from abruptly changing in changing the gear stages.

In the multi-stage automatic transmission 312 of this embodiment, at least one of the first clutch 340 or the second clutch 360 is always in the engaged state, and thus, a decrease in a driving force by clutch disengagement as described in the multi-stage automatic transmission 12 of the first embodiment does not occur. However, in the multi-stage automatic transmission 312, the driving force increases by shifting down the gear stage, and thus, the vehicle is subjected to a posture change in which the lean angle decreases. In the multi-stage automatic transmission 312, the driving force decreases by shifting up the gear stage, and thus, the vehicle is subjected to a posture change in which the lean angle increases.

The shift-down is a gear-shift operation of changing gear stages in order to increase a gear-shift ratio. The shift-up is a gear-shift operation of changing gear stages in order to reduce a gear-shift ratio.

The controller 307 of the multi-stage automatic transmission 312 having the configuration of this embodiment has a configuration similar to that of the controller 7 of the first embodiment. That is, the controller 307 includes a driving force calculator 71, a lean angle calculator 72, a gear-shift control determiner 73, and a gear-shift signal generator 74. Configurations of these components are similar to those in the first embodiment, and thus, will not be described in detail.

In a manner similar to the controller 7 of the first embodiment, if the lean angle obtained from the lean angular velocity while the vehicle 1 leans leftward is included in the range from the leftward lean angle threshold to the lean angle of zero degrees, the lean angle of the vehicle 1 changes toward the lean angle of zero degrees, and the lean angular velocity exceeds the lean angular velocity threshold, or if the lean angle while the vehicle 1 leans rightward is included in the range from the rightward lean angle threshold to the lean angle of zero degrees, the lean angle of the vehicle 1 changes toward the lean angle of zero degrees, and the lean angular velocity exceeds the lean angular velocity threshold, the controller 307 of this embodiment also changes an output of the engine 11 in accordance with an operation amount of the throttle grip 9, while holding gear stages in the multi-stage automatic transmission 312.

Accordingly, if the vehicle 1 is in the vehicle state where it is predicted that the vehicle 1 changes from the leftward lean state to the rightward lean state through the state where the lean angle is zero degrees or the vehicle state in which it is predicted that the vehicle 1 changes from the rightward lean state to the leftward lean state through the state where the lean angle is zero degrees, a posture change occurring in the vehicle 1 by changing gear stages in the multi-stage automatic transmission 312 can be reduced.

In addition, even in the case where the gear stages in the multi-stage automatic transmission 312 are held as described above, a posture of the vehicle 1 during turning can be controlled in accordance with the operation amount of the throttle grip 9 by controlling an output of the engine 11 in accordance with the operation amount of the throttle grip 9.

Thus, if the lean angle obtained from the lean angular velocity while the vehicle 1 leans leftward is included in the range from the leftward lean angle threshold to the lean angle of zero degrees, the lean angle of the vehicle 1 changes toward the lean angle of zero degrees, and the lean angular velocity exceeds the lean angular velocity threshold, or if the lean angle while the vehicle 1 leans rightward is included in the range from the rightward lean angle threshold to the lean angle of zero degrees, the lean angle of the vehicle 1 changes toward the lean angle of zero degrees, and the lean angular velocity exceeds the lean angular velocity threshold, a posture change occurring in the vehicle 1 by changing gear stages in the multi-stage automatic transmission 312 can be reduced, and a posture of the vehicle 1 during turning can be controlled in accordance with the operation amount of the throttle grip 9.

If the lean angle obtained from the lean angular velocity while the vehicle 1 leans leftward is included in the range from the leftward lean angle threshold to the lean angle of zero degrees, the lean angle of the vehicle 1 changes toward the lean angle of zero degrees, and the lean angular velocity exceeds the lean angular velocity threshold, or if the lean angle while the vehicle 1 leans rightward is included in the range from the rightward lean angle threshold to the lean angle of zero degrees, the lean angle of the vehicle 1 changes toward the lean angle of zero degrees, and the lean angular velocity exceeds the lean angular velocity threshold, the controller 307 inhibits changing of gear stages in the multi-stage automatic transmission 312, irrespective of the physical quantity concerning steering in the steering device 8, in a manner similar to the controller 7 of the first embodiment. As a result, a posture change occurring in the vehicle by changing the gear stages in the multi-stage automatic transmission 312 can be more reliably reduced.

In this embodiment, the configuration of the multi-stage automatic transmission 312 is applied to the configuration of the multi-stage automatic transmission of the first embodiment, but the present teaching is not limited to this example. The configuration of the multi-stage automatic transmission 312 of the fourth embodiment may be applied to configurations of multi-stage automatic transmissions of other embodiments such as the second embodiment.

### (Other Embodiments)

The embodiments of the present teaching have been described above, but the above embodiments are merely examples for carrying out the teaching. Thus, the present teaching is not limited to the embodiments, and the embodiments may be modified as necessary within a range not departing from the gist of the teaching.

In the first embodiment, if the lean angle obtained from the lean angular velocity while the vehicle 1 leans leftward is included in the range from the leftward lean angle threshold to the lean angle of zero degrees, the lean angle of the vehicle 1 changes toward the lean angle of zero degrees, and the lean angular velocity exceeds the lean angular velocity threshold, or if the lean angle while the vehicle 1 leans rightward is included in a range from the rightward lean angle threshold to the lean angle of zero degrees, the lean angle of the vehicle 1 changes toward the lean angle of zero degrees, and the lean angular velocity exceeds the lean angular velocity threshold, the controller 7 holds the gear stages in the multi-stage automatic transmission 12, irrespective of the physical quantity concerning steering in the steering device 8. In the second embodiment, if the lean angular velocity of the vehicle 1 exceeds the lean angular velocity threshold and the lean angle of the vehicle exceeds the lean angle threshold, the controller 107 holds the gear stages in the multi-stage automatic transmission 12, irrespective of the physical quantity concerning steering in the steering device 8.

Alternatively, the controller may determine whether to permit changing of the gear stages in the multi-stage automatic transmission in accordance with the physical quantity concerning steering of the steering device. For example, if the physical quantity concerning steering indicates that the vehicle is turning in a lean state, the controller may hold the gear stages in the multi-stage automatic transmission.

In each of the embodiments described above, a driving force is transferred from the engine unit 10 to the rear wheel 4 of the vehicle 1. Alternatively, a driving force may be transferred from the engine unit to the front wheel of the vehicle. In this case, the multi-stage automatic transmission changes a driving force to be transferred from the engine to the front wheel.

In each of the embodiments described above, the vehicle 1 includes the engine 11 as a driving source. Alternatively, the driving source of the vehicle may be a motor. In this case, the controller controls a rotation speed of the motor when a driver operates the throttle grip. The driving source may be a hybrid system using a combination of an engine and a motor.

In the first and third embodiments, examples of the multi-stage automatic transmission are described. Alternatively, the multi-stage automatic transmission may be a transmission with any configuration as long as the transmission has a configuration including at least one clutch and a plurality of gear stages and capable of automatically changing the gear stages stepwise.

In each of the embodiments described above, the multi-stage automatic transmissions 12 and 312 are six-speed transmissions. Alternatively, the multi-stage automatic transmission may be a transmission for five speeds or less, or a transmission for seven or more speeds.

In each of the embodiments described above, the steering device 8 steers the front wheel 3 of the vehicle 1. Alternatively, the steering device may steer the rear wheel. The steering device may steer the front wheel and the rear wheel.

In each of the embodiments described above, the motorcycles have been described as examples of the vehicle. The vehicle, however, may be a vehicle other than a motorcycle as long as the vehicle is a leaning vehicle including a multi-stage automatic transmission.

In each of the embodiments described above, a throttle grip is employed as an example of an accelerator operator. However, the accelerator operator may have any configuration as long as an operator including a driver is capable of inputting an operation for adjusting a driving force of the vehicle.

In each of the embodiments described above, the steering device 8 includes the steering shaft 81 and the handle 82. However, the steering device may have any configuration as long as the vehicle can be steered.

### REFERENCE SIGNS LIST

1 vehicle (leaning vehicle)
2 vehicle body
3 front wheel
4 rear wheel
7, 107, 307 controller
8 steering device
9 throttle grip (accelerator operator)
10 engine unit
11 engine
12, 312 multi-stage automatic transmission
20, 320 transmission mechanism
40 clutch
46 input gear
50 shift mechanism
61 lean detector (lean angular velocity detector)
62 steering detector
71, 171 lean angular velocity acquirer
72, 172 gear-shift control determiner
73 gear-shift signal generator
74, 174 memory
75 operation amount acquirer
76 driving signal generator
77 steering data acquirer
81 steering shaft
82 handle
340 first clutch
346, 366 input gear
350 shift mechanism
360 second clutch

## Claims

1. A leaning vehicle (1) that is configured to lean leftward when turning to the left and to lean rightward when turning to the right, the leaning vehicle (1) comprising:
a vehicle body (2);
a plurality of wheels (3, 4) including a front wheel (3) and a rear wheel (4);
a driving source (11) configured to supply a driving force to at least one of the front wheel (3) or the rear wheel (4);
a gear-type multi-stage automatic transmission (12, 312) including a plurality of gear stages and a clutch (40, 340, 360), and configured to change the driving force to be transferred from the driving source (11) to at least one of the front wheel (3) or the rear wheel (4) by automatically changing the plurality of gear stages stepwise;
a lean angular velocity detector (61) configured to detect a lean angular velocity while the vehicle body (2) leans leftward or the vehicle body (2) leans rightward;
an accelerator operator (9) to which an input operation for controlling an output of the driving source (11) may be performed; and
a multi-stage automatic gear-shift controller (7, 107, 307) configured to control changing of the plurality of gear stages in the multi-stage automatic transmission (12, 312) and to control the output of the driving source (11) in accordance with the input operation to the accelerator operator (9), **characterized in that**
the multi-stage automatic gear-shift controller (7, 107, 307) is configured to change the output of the driving source (11) in accordance with an operation amount of the accelerator operator (9), while holding a gear stage in the multi-stage automatic transmission (12, 312), based on a vehicle state where it is predicted that the leaning vehicle (1) changes from a leftward lean state to a rightward lean state through a state where a lean angle obtained from a lean angular velocity detected by the lean angular velocity detector (61) is zero degrees or a vehicle state where it is predicted that the leaning vehicle (1) changes from the rightward lean state to the leftward lean state through the state where the lean angle is zero degrees.

2. The leaning vehicle (1) according to claim 1, wherein
if the lean angle obtained from the lean angular velocity while the leaning vehicle (1) leans leftward is included in a range from a leftward lean angle threshold to a lean angle of zero degrees, the lean angle of the leaning vehicle (1) changes toward the lean angle of zero degrees, and the lean angular velocity exceeds a lean angular velocity threshold, the multi-stage automatic gear-shift controller (7, 107, 307) is configured to predict that the leaning vehicle (1) changes from the leftward lean state to the rightward lean state through the state where the lean angle is zero degrees, or if the lean angle while the leaning vehicle (1) leans rightward is included in a range from a rightward lean angle threshold to the lean angle of zero degrees, the lean angle of the leaning vehicle (1) changes toward the lean angle of zero degrees, and the lean angular velocity exceeds the lean angular velocity threshold, the multi-stage automatic gear-shift controller (7, 107, 307) is configured to predict that the leaning vehicle (1) changes from the rightward lean state to the leftward lean state through the state where the lean angle is zero degrees.

3. The leaning vehicle (1) according to claim 1 or 2, further comprising
a steering device (8) configured to steer at least one of the front wheel (3) or the rear wheel (4), wherein
if the lean angular velocity detected by the lean angular velocity detector (61) exceeds the lean angular velocity threshold, the multi-stage automatic gear-shift controller (7, 107, 307) is configured to hold the plurality of gear stages in the multi-stage automatic transmission (12, 312), irrespective of a physical quantity concerning steering in the steering device (8).

4. The leaning vehicle (1) according to claims 2 or 3, wherein
if the lean angular velocity detected by the lean angular velocity detector (61) is maintained for a predetermined time in a state less than or equal to the lean angular velocity threshold while the plurality of gear stages in the multi-stage automatic transmission (12, 312) are held, the multi-stage automatic gear-shift controller (7, 107, 307) is configured to permit changing of the plurality of gear stages in the multi-stage automatic transmission (12, 312).

## Patentansprüche

1. Ein Neigefahrzeug (1), das dazu konfiguriert ist, sich nach links zu neigen, wenn dasselbe nach links fährt, und sich nach rechts zu neigen, wenn dasselbe nach rechts fährt, wobei das Neigefahrzeug (1) folgende Merkmale aufweist:
einen Fahrzeugkörper (2);
eine Mehrzahl von Rädern (34), die ein Vorderrad (3) und ein Hinterrad (4) umfasst;
eine Antriebsquelle (11), die dazu konfiguriert ist, dem Vorderrad (3) und/oder Hinterrad (4) eine Antriebskraft zuzuführen;
ein Gangtyp-Mehrstufen-Automatikgetriebe (12, 312), das eine Mehrzahl von Gängen und eine Kupplung (40, 340, 360) umfasst, und dazu konfiguriert ist, die Antriebskraft, die von der Antriebsquelle (11) zu dem Vorderrad (3) und/oder dem Hinterrad (4) zu übertragen ist, zu ändern, indem die Mehrzahl von Gangstufen automatisch schrittweise geändert wird;
einen Neigungswinkelgeschwindigkeitsdetektor (61), der dazu konfiguriert ist, eine Neigungswinkelgeschwindigkeit zu detektieren, während sich der Fahrzeugkörper (2) nach links neigt oder sich der Fahrzeugkörper (2) nach rechts neigt;
einen Beschleunigungsoperator (9), an dem ein Eingabevorgang zum Steuern einer Ausgabe der Antriebsquelle (11) ausgeführt werden kann; und
eine Mehrstufen-Automatik-Gangwechselsteuerung (7, 107, 307), die dazu konfiguriert ist, das Ändern der Mehrzahl von Gangstufen in dem Mehrstufen-Automatikgetriebe (12, 312) zu steuern und die Ausgabe der Antriebsquelle (11) gemäß dem Eingabevorgang an den Beschleunigungsoperator (9) zu steuern,
**dadurch gekennzeichnet, dass** die Mehrstufen-Automatik-Gangwechselsteuerung (7, 107, 307) dazu konfiguriert ist, die Ausgabe der Antriebsquelle (11) gemäß einem Bedienungsbetrag des Beschleunigungsoperators (9) zu ändern, während eine Gangstufe in dem Mehrstufen-Automatikgetriebe (12, 312) gehalten wird, auf der Basis eines Fahrzeugzustands, wo vorausgesagt wird, dass sich das Neigefahrzeug (1) von einem Linksneigungszustand zu einem Rechtsneigungszustand über einen Zustand ändert, wo ein Neigungswinkel, der aus einer Neigungswinkelgeschwindigkeit erhalten wird, die durch den Neigungswinkelgeschwindigkeitsdetektor (61) detektiert wird, null Grad beträgt, oder eines Fahrzeugzustands, wo vorausgesagt wird, dass sich das Neigefahrzeug (11) von dem Rechtsneigungszustand zu dem Linksneigungszustand über den Zustand ändert, wo der Neigungswinkel null Grad beträgt.

2. Das Neigefahrzeug (1) gemäß Anspruch 1, wobei
falls der Neigungswinkel, der aus der Neigungswinkelgeschwindigkeit erhalten wird, während sich das Neigefahrzeug (1) nach links neigt, in einem Bereich von einer Linksneigungswinkelschwelle zu einem Neigungswinkel von null Grad enthalten ist, sich der Neigungswinkel des Neigefahrzeugs (1) hin zu dem Neigungswinkel von null Grad ändert und die Neigungswinkelgeschwindigkeit eine Neigungswinkelgeschwindigkeitsschwelle überschreitet, die Mehrstufen-Automatik-Gangwechselsteuerung (7, 107, 307) dazu konfiguriert ist, vorauszusagen, dass sich das Neigefahrzeug (1) von dem Linksneigungszustand zu dem Rechtsneigungszustand über den Zustand ändert, wo der Neigungswinkel null Grad beträgt, oder falls der Neigungswinkel dann, während sich das Neigefahrzeug (1) rechts neigt, in einem Bereich von einer Rechtsneigungswinkelschwelle zu dem Neigungswinkel von null Grad enthalten ist, sich der Neigungswinkel des Neigefahrzeugs (1) hin zu dem Neigungswinkel von null Grad ändert und die Neigungswinkelgeschwindigkeit die Neigungswinkelgeschwindigkeitsschwelle überschreitet, die Mehrstufen-Automatik-Gangwechselsteuerung (7, 107, 307) dazu konfiguriert ist, vorauszusagen, dass sich das Neigefahrzeug (1) von dem Rechtsneigungszustand zu dem Linksneigungszustand über den Zustand ändert, wo der Neigungswinkel null Grad beträgt.

3. Das Neigefahrzeug (1) gemäß Anspruch 1 oder 2, das ferner Folgendes aufweist:
eine Lenkvorrichtung (8), die dazu konfiguriert ist, das Vorderrad (3) und/oder Hinterrad (4) zu lenken, wobei
falls die Neigungswinkelgeschwindigkeit, die durch den Neigungswinkelgeschwindigkeitsdetektor (61) detektiert wird, die Neigungswinkelgeschwindigkeitsschwelle überschreitet, die Mehrstufen-Automatik-Gangwechselsteuerung (7, 107, 307) dazu konfiguriert ist, die Mehrzahl von Gangstufen in dem Mehrstufen-Automatikgetriebe (12, 312) zu halten, unabhängig von einer physischen Größe, die das Lenken in der Lenkvorrichtung (8) betrifft.

4. Das Neigefahrzeug (1) gemäß Anspruch 2 oder 3, wobei
falls die Neigungswinkelgeschwindigkeit, die von dem Neigungswinkelgeschwindigkeitsdetektor (61) detektiert wird, für eine vorbestimmte Zeit in einem Zustand, der kleiner als oder gleich groß wie die Neigungswinkelgeschwindigkeitsschwelle ist, aufrechterhalten wird, während die Mehrzahl von Gangstufen in dem Mehrstufen-Automatikgetriebe (12, 312) gehalten wird, die Mehrstufen-Automatik-Gangwechselsteuerung (7, 107, 307) dazu konfiguriert ist, das Ändern der Mehrzahl von Gangstufen in dem Mehrstufen-Automatikgetriebe (12, 312) zu erlauben.

## Revendications

1. Véhicule à inclinaison (1) qui est configuré pour s'incliner vers la gauche lors d'un virage à gauche et pour s'incliner vers la droite lors d'un virage à droite, le véhicule à inclinaison (1) comprenant:
une carrosserie de véhicule (2);
une pluralité de roues (3, 4) comportant une roue avant (3) et une roue arrière (4);
une source d'entraînement (11) configurée pour fournir une force d'entraînement à au moins l'une parmi la roue avant (3) ou la roue arrière (4);
une transmission automatique à étages multiples de type à engrenage (12, 312) comportant une pluralité d'étages d'engrenage et un embrayage (40, 340, 360), et configurée pour changer la force d'entraînement à transférer de la source d'entraînement (11) à au moins l'une parmi la roue avant (3) ou la roue arrière (4) en changeant automatiquement pas à pas la pluralité d'étages d'engrenage;
un détecteur de vitesse angulaire d'inclinaison (61) configuré pour détecter une vitesse angulaire d'inclinaison tandis que la carrosserie de véhicule (2) s'incline vers la gauche ou la carrosserie de véhicule (2) s'incline vers la droite;
un actionneur d'accélérateur (9) sur lequel peut être effectuée une opération d'entrée pour commander une sortie de la source d'entraînement (11); et
un moyen de commande de changement de vitesse automatique à étages multiples (7, 107, 307) configuré pour commander le changement de la pluralité d'étages d'engrenage dans la transmission automatique à étages multiples (12, 312) et pour commander la sortie de la source d'entraînement (11) selon l'opération d'entrée vers l'actionneur d'accélérateur (9),
**caractérisé par le fait que**
le moyen de commande de changement de vitesse automatique à étages multiples (7, 107, 307) est configuré pour modifier la sortie de la source d'entraînement (11) selon une quantité d'actionnement de l'actionneur d'accélérateur (9) tout en maintenant un étage d'engrenage dans le transmission automatique à étages multiples (12, 312), sur base d'un état de véhicule dans lequel il est prédit que le véhicule à inclinaison (1) change d'un état incliné vers la gauche à un état incliné vers la droite en passant par un état dans lequel un angle d'inclinaison obtenu à partir d'un angle d'inclinaison détecté par le détecteur de vitesse angulaire d'inclinaison (61) est de zéro degré ou un état de véhicule dans lequel il est prédit que le véhicule à inclinaison (1) passe de l'état d'inclinaison vers la droite à l'état d'inclinaison vers la gauche en passant par l'état dans lequel l'angle d'inclinaison est de zéro degré.

2. Véhicule à inclinaison (1) selon la revendication 1, dans lequel si l'angle d'inclinaison obtenu à partir de la vitesse angulaire d'inclinaison tandis que le véhicule à inclinaison (1) s'incline vers la gauche est inclus dans une plage allant d'un seuil d'angle d'inclinaison vers la gauche à un angle d'inclinaison de zéro degré, l'angle d'inclinaison du véhicule à inclinaison (1) change vers l'angle d'inclinaison de zéro degré, et la vitesse angulaire d'inclinaison excède un seuil de vitesse angulaire d'inclinaison, le moyen de commande de changement de vitesse automatique à étages multiples (7, 107, 307) est configuré pour prédire que le véhicule à inclinaison (1) change de l'état d'inclinaison vers la gauche à l'état d'inclinaison vers la droite en passant par l'état où l'angle d'inclinaison est de zéro degré, ou si l'angle d'inclinaison tandis que le véhicule à inclinaison (1) s'incline vers la droite est inclus dans une plage allant d'un seuil d'angle d'inclinaison vers la droite à l'angle d'inclinaison de zéro degré, l'angle d'inclinaison du véhicule à inclinaison (1) change vers l'angle d'inclinaison de zéro degré, et la vitesse angulaire d'inclinaison excède le seuil de vitesse angulaire d'inclinaison, le moyen de commande de changement de vitesse automatique à étages multiples (7, 107, 307) est configuré pour prédire que le véhicule à inclinaison (1) change de l'état d'inclinaison vers la droite à l'état d'inclinaison vers la gauche en passant par l'état dans lequel l'angle d'inclinaison est de zéro degré.

3. Véhicule à inclinaison (1) selon la revendication 1 ou 2, comprenant par ailleurs
un dispositif de direction (8) configuré pour diriger au moins l'une parmi la roue avant (3) ou la roue arrière (4),
dans lequel
si la vitesse angulaire d'inclinaison détectée par le détecteur de vitesse angulaire d'inclinaison (61) excède le seuil de vitesse angulaire d'inclinaison, le moyen de commande de changement de vitesse automatique à étages multiples (7, 107, 307) est configuré pour maintenir la pluralité d'étages d'engrenage dans la transmission automatique à étages multiples (12, 312), indépendamment d'une quantité physique relative à la direction dans le dispositif de direction (8).

4. Véhicule à inclinaison (1) selon les revendications 2 ou 3, dans lequel
si la vitesse angulaire d'inclinaison détectée par le détecteur de vitesse angulaire d'inclinaison (61) est maintenue pendant un temps prédéterminé dans un état inférieur ou égal au seuil de vitesse angulaire d'inclinaison tandis que la pluralité d'étages d'engrenage dans la transmission automatique à étages multiples (12, 312) sont maintenus, le moyen de commande de changement de vitesse automatique à étages multiples (7, 107, 307) est configuré pour permettre le changement de la pluralité d'étages d'engrenage dans la transmission automatique à étages multiples (12, 312).
